# EUROPEAN PATENT APPLICATION

(11) **EP 4 844 330 A1**
(43) Date of publication of application: **25.11.2026**
(21) Application number: 25741782.4
(22) Date of filing: 09.01.2025
(51) Int. Cl.: G01B 9/02002, G01B 9/02015

(54) **OPTICAL INTERFEROMETER, OPTICAL INTERFEROMETER SYSTEM, AND OPTICAL PATH DIFFERENCE MEASURING METHOD**

(30) Priority: 15.01.2024 JP 2024003799
(71) Applicant: FURUKAWA ELECTRIC CO., LTD., Chiyoda-ku, Tokyo 100-8322 (JP)
(72) Inventor: OGOSHI, Haruki, Tokyo 100-8322 (JP); YOSHIDA, Junji, Tokyo 100-8322 (JP); OHISHI, Norihiro, Tokyo 100-8322 (JP); ICHIHARA, Satoru, Tokyo 100-8322 (JP); OKUBO, Ryosuke, Tokyo 100-8322 (JP); SHIRAI, Ayato, Ichihara-shi, Chiba 290-8555 (JP); TAKASAKA, Shigehiro, Tokyo 100-8322 (JP); SUGIZAKI, Ryuichi, Tokyo 100-8322 (JP); HAYASHI, Shunya, Tokyo 100-8322 (JP)
(74) Representative: SSM Sandmair
(86) International application number: PCT/JP2025/000572
(87) International publication number: WO 2025/154650

(57) **Abstract**

An optical interferometer includes: a broadband light source that outputs a first light in which the relative intensity noise (RIN) at a predetermined frequency domain is suppressed; a wavelength divider that performs wavelength division of the first light into a first component and into a second component having a central wavelength different from a central wavelength of the first component, and outputs those components; a first optical path through which the first component output from the wavelength divider propagates; a second optical path through which the second component output from the wavelength divider propagates; and a wavelength multiplexer that multiplexes the first component, which has propagated through the first optical path, and the second component, which has propagated through the second optical path, and outputs the multiplexed light as a second light.

## Description

### Field

The present invention relates to an optical interferometer, an optical interferometer system, and an optical path difference measurement method.

### Background

The technology of optical interferometers has a long history. After the invention of the laser in the 1960s, optical interferometers having the laser as the light source (i.e., laser interferometers) have made rapid progress. The invention of the laser made it possible to utilize the coherent light, and the advancement in computers made it easier to perform mathematical processing of interferometer data. Moreover, the development of single-mode optical fibers made it possible to configure more complex and compact optical paths. All such factors can be cited as the reasons for the advancement made regarding optical interferometers, particularly, regarding laser interferometers.

The laser interferometers have a wide scope of application. When the area of application of laser interferometers is narrowed down to distance measurement, it includes precise measurement of surface shapes by utilizing the high resolution, and includes distance measurement of about a few kilometers by utilizing the long coherence length. Particularly, regarding that latter case, the LIGO that is meant for gravity wave detection represents the ultimate application.

If the high coherency of the laser light can be utilized, it becomes possible to perform distance measurement over a few kilometers to about a few tens of kilometers. However, a device capable of performing distance measurement over such a long distance happens to have a complex configuration, and it is not an easy task to configure an easily-transportable and compact device. Accordingly, generally, in order to perform distance measurement over a few tens of meters and more, the Time Of Flight (TOF) has become widely popular for measuring the period of time taken by an optical pulse discharged from a light source to reach the target, get reflected, and travel back. In that regard, the advancement in the semiconductor laser technology and the ease of implementation of optical pulses having high speed and high output has been a big factor. For example, regarding autonomous driving or driving assistance that is garnering significant attention lately, distance measurement represents the essential technology. Thus, a TOF-type LiDAR in which the laser light is used is gaining popularity.

### Citation List

### Patent Literature

[Patent Literature 1] International Laid-open Pamphlet No. 2022/054860
[Patent Literature 2] International Laid-open Pamphlet No. 2023/106348
[Patent Literature 3] International Laid-open Pamphlet No. 2023/190885

### Non Patent Literature

[Non Patent Literature 1] FERCHER, Adolf F., et al. Optical coherence tomography-principles and applications. Reports on progress in physics, 2003, 66.2: 239. P. 260 OCT light source.
[Non Patent Literature 2] DERICKSON, Dennis. Fiber optic test and measurement. Fiber optic test and measurement/edited by Dennis Derickson. Upper Saddle River, 1998., pp. 177-194.
[Not Patent Literature 3] NAZARATHY, Moshe, et al. Spectral analysis of optical mixing measurement. Journal of Lightwave technology, 1989, 7.7: 1083-1096.
[Non Patent Literature 4] GALLION, Philippe; DEBARGE, Guy. Quantum phase noise and field correlation in single frequency semiconductor laser system. IEEE Journal of Quantum Electronics, 1984, 20.4: 343-349.
[Non Patent Literature 5] TKACH, R.; CHRAPLYVY, A. Phase noise and linewidth in an InGaAsP DFB laser. Journal of Lightwave Technology, 1986, 4.11: 1711-1716.

### Summary

### Technical Problem

However, in the case of using the TOF, in principle, it is not possible to avoid significant attenuation in the power of the reflected light. For that reason, in the case of using the TOF, the technical difficulty lies in the need for having a short optical pulse with high output. On the other hand, as in the case of an optical interferometer in which the coherency of the laser light is put to use, when distance measurement is performed using the interference of light, it becomes relatively easier to maintain the power of the reference light at a high level and to secure the signal-to-noise ratio (SNR).

In the case of performing distance measurement using an optical interferometer, the propagation-delay time difference, which is caused by the difference between two optical path lengths in the optical interferometer, appears in the form of the FSR (Free Spectral Range) in the interfering light.

However, in order to perform distance measurement over a few tens of kilometers or more, the laser light needs to have the linewidth of about few kHz. Moreover, in order to achieve a distance measurement device that is compact, economical, and easily portable; it becomes essential to use a semiconductor laser. However, generally, a semiconductor laser has a large linewidth of about few MHz. In recent years, with the advancement and the spread of the coherent modulation-demodulation technology in the optical fiber communication, although a semiconductor laser having the linewidth equal to or smaller than 100 kHZ has been under development, achieving the linewidth of about few kHz in a stable manner is not an easy task.

The present invention is made in view of the issues mentioned above, and it is an objective of the present invention to provide an optical interferometer that is compact, that has a simple configuration, and that is applicable in various intended purposes; to provide an optical interferometer system including that optical interferometer; and to provide an optical path difference measurement method.

### Solution to Problem

To solve the problems and achieve an object, there is provided an optical interferometer according to an aspect of the present invention including: a broadband light source that outputs a first light in which relative intensity noise (RIN) at a predetermined frequency domain is suppressed; a wavelength divider that performs wavelength division of the first light into a first component and into a second component having a central wavelength different from a central wavelength of the first component, and outputs the first component and the second component; a first optical path through which the first component output from the wavelength divider propagates; a second optical path through which the second component output from the wavelength divider propagates; and a wavelength multiplexer that multiplexes the first component, which has propagated through the first optical path, and the second component, which has propagated through the second optical path, and outputs multiplexed light as a second light.

Full width at half maximum of a power spectrum with respect to wavelength of the first component may be narrower than full width at half maximum of a power spectrum with respect to wavelength of the second component.

Full width at half maximum of a power spectrum with respect to wavelength of the first light is equal to or greater than 5 nm and equal to or smaller than 30 nm.

The optical interferometer may further includes a delay control device that is disposed either in the first optical path or in the second optical path.

The optical interferometer may not include a polarization control mechanism in the first optical path and the second optical path.

An optical path difference between the first optical path and the second optical path may be in range from sub-cm to a few tens of km.

An optical interferometer according to another aspect of the present invention includes: a broadband light source that outputs a first light in which relative intensity noise (RIN) at a predetermined frequency domain is suppressed; a power divider that performs power division of the first light into a third component and into a fourth component, and outputs the third component and the fourth component; a first optical path through which the third component output from the power divider propagates; a second optical path through which the fourth component output from the power divider propagates; and a power combiner that combines the third component, which has propagated through the first optical path, and the fourth component, which has propagated through the second optical path, and outputs combined light as a fifth light.

An optical path difference between the first optical path and the second optical path may be in range from sub-cm to sub-m.

An optical interferometer according to still another aspect includes: a broadband light source that outputs a first light in which periodic ripples appear in power spectrum of light; a power divider that performs power division of the first light into a third component and into a fourth component, and outputs the third component and the fourth component; a first optical path through which the third component output from the power divider propagates; a second optical path through which the fourth component output from the power divider propagates; and a power combiner that combines the third component, which has propagated through the first optical path, and the fourth component, which has propagated through the second optical path, and outputs combined light as a fifth light.

An optical path difference between the first optical path and the second optical path is in range from sub-cm to 100 m.

The optical interferometer may include a polarizer that is disposed in between the broadband light source and the power divider.

The broadband light source may include: two primary light sources that output primary lights in which RIN at the predetermined frequency domain is suppressed, and a polarization beam combiner that performs polarization combining of the two primary lights coming from the two primary light sources, and outputs combined light as the first light.

An amount of RIN suppression in the fifth light may be eased up as compared to amount of RIN suppression in the first light.

The first optical path may include a spatial optical path through which the first component or the third component propagates toward a measurement target and also travels back upon reaching the measurement target.

The first optical path may include a target optical fiber for length measurement.

In the first light, amount of RIN suppression at a frequency in the predetermined frequency domain may be equal to or greater than 10 dB.

In the first light, corner frequency at which RIN suppression begins may be equal to or greater than 1 GHz.

Still another aspect of the present invention is an optical interferometer system including: the optical interferometer; a light receiver that receives the second light or the fifth light, and outputs a current signal corresponding to the received light; and an electrical spectrum analyzer that displays, in a frequency domain, spectrum of the current signal input thereto.

Still another aspect of the present invention is an optical interferometer system including: the optical interferometer; a light receiver that receives the second light or the fifth light, and outputs a current signal corresponding to received light; and a processing device that processes, in a frequency domain, information included in the current signal input thereto.

Still another aspect of the present invention is an optical path difference measurement method implemented by the optical interferometer system including: obtaining RIN spectrum of the second light or the fifth light; obtaining a delay period τ₀ from FSR (Free Spectral Range) of the obtained RIN spectrum; and estimating an optical path difference L between the first optical path and the second optical path according to equation given below.$L = {τ}_{0} ⋅ c / n$

Herein, c represents velocity of light in a vacuum, and n represents effective refractive index of optical paths having the optical path difference therebetween.

### Advantageous Effects of Invention

According to the present invention, an optical interferometer is provided that is compact, that has a simple configuration, and that is applicable in various intended purposes.

### Brief Description of Drawings

FIG. 1 is a schematic diagram of an optical interferometer according to a first embodiment.
FIG. 2 is a schematic diagram of a light source illustrated in FIG. 1.
FIG. 3 is a diagram illustrating some part of the light source illustrated in FIG. 2.
FIG. 4 is a diagram illustrating an example of a power spectrum of a first light.
FIG. 5 is a diagram illustrating an example of a power (Pf) of the output light with respect to Ib.
FIG. 6 is a diagram that schematically illustrates a RIN spectrum in which the RIN is suppressed.
FIG. 7A is a diagram illustrating an example of the power spectrum with respect to the wavelength of the first light.
FIG. 7B is a diagram illustrating an example of the power spectrum with respect to the wavelength of a first component.
FIG. 7C is a diagram illustrating an example of the power spectrum with respect to the wavelength of a second component.
FIG. 7D is a diagram illustrating an example of the power spectrum with respect to the wavelength of a second light.
FIG. 8 is a diagram in which the power spectrum of the first light illustrated in FIG. 7A and the power spectrum of the second light illustrated in FIG. 7D are illustrated in an overlapped manner.
FIG. 9 is a diagram illustrating an example of the RIN spectrum of the first light and the RIN spectrum of the second light.
FIG. 10 is a diagram illustrating the ripples appearing in an example of the RIN spectrum of the second light in the case in which the target optical fiber for length measurement included in the first optical path has the length of 1 m.
FIG. 11 is a diagram illustrating the ripples appearing in an example of the RIN spectrum of the second light in the case in which the target optical fiber for length measurement included in the first optical path has the length of 100 m.
FIG. 12 is a diagram illustrating the ripples appearing in an example of the RIN spectrum of the second light in the case in which the target optical fiber for length measurement included in the first optical path has the length of 1 km.
FIG. 13 is a diagram illustrating the ripples appearing in an example of the RIN spectrum of the second light in the case in which the target optical fiber for length measurement included in the first optical path has the length of 10 km.
FIG. 14A is a diagram illustrating the ripples appearing in an example of the RIN spectrum of the second light in the case in which the target optical fiber for length measurement included in the first optical path has the length of 40 km.
FIG. 14B is a diagram illustrating the ripples appearing in an example of the RIN spectrum of the second light in the case in which the target optical fiber for length measurement included in the first optical path has the length of 40 km.
FIG. 15A is a diagram for explaining about the FSR in an optical interferometer of the known type.
FIG. 15B is a diagram for explaining about the FSR in an optical interferometer of the known type.
FIG. 15C is a diagram for explaining about the FSR in an optical interferometer of the known type.
FIG. 16 is a diagram illustrating examples of the RIN spectrum of the second light in the cases in which, when the target optical fiber for length measurement in the first optical path has the length of 100 m, the first component and the second component are not swapped and are swapped.
FIG. 17 is a diagram illustrating examples of the RIN spectrum of the second light in the cases in which, when the target optical fiber for length measurement has the length of 1 km, the first component and the second component are not swapped and are swapped.
FIG. 18A is a diagram illustrating the RIN spectrum in the case in which Is is set to 0 mA and Ib is set to 1000 mA.
FIG. 18B is a diagram illustrating the RIN spectrum in the case in which Is is set to 20 mA and Ib is set to 1000 mA.
FIG. 18C is a diagram illustrating the RIN spectrum in the case in which Is is set to 25 mA and Ib is set to 1000 mA.
FIG. 18D is a diagram illustrating the RIN spectrum in the case in which Is is set to 30 mA and Ib is set to 1000 mA.
FIG. 18E is a diagram illustrating the RIN spectrum in the case in which Is is set to 50 mA and Ib is set to 1000 mA.
FIG. 18F is a diagram illustrating the RIN spectrum in the case in which Is is set to 100 mA and Ib is set to 1000 mA.
FIG. 18G is a diagram illustrating the RIN spectrums in the cases in which Is is set to 100 mA and Ib is set to 200 mA, 300 mA, and 1000 mA.
FIG. 19 is a diagram illustrating, in an enlarged manner, the surrounding of a depression present at the wavelength approximately equal to 1443 nm of the wavelength spectrum illustrated in FIG. 7D.
FIG. 20 is diagram illustrating the criteria for the establishment of the interference in a wavelength-division interferometer.
FIG. 21A is a diagram in which the power spectrum of the first light L1 is illustrated in an enlarged manner in the case in which Is is set to 0 mA.
FIG. 21B is a diagram in which the power spectrum of the first light L1 is illustrated in an enlarged manner in the case in which Is is set to 20 mA.
FIG. 21C is a diagram in which the power spectrum of the first light L1 is illustrated in an enlarged manner in the case in which Is is set to 30 mA.
FIG. 21D is a diagram in which the power spectrum of the first light L1 is illustrated in an enlarged manner in the case in which Is is set to 50 mA.
FIG. 21E is a diagram in which the power spectrum of the first light L1 is illustrated in an enlarged manner in the case in which Is is set to 75 mA.
FIG. 21F is a diagram in which the power spectrum of the first light L1 is illustrated in an enlarged manner in the case in which Is is set to 100 mA.
FIG. 22 is a diagram illustrating an example of the RIN spectrum of the second light when, in the case in which the target optical fiber for length measurement included in the first optical path has the length of 1 m, the relationship between the polarization of the first component and the polarization of the second component is changed.
FIG. 23 is a schematic diagram of an optical interferometer according to a second embodiment.
FIG. 24 is a schematic diagram of an optical interferometer according to a third embodiment.
FIG. 25 is a schematic diagram of an optical interferometer according to a fourth embodiment.
FIG. 26A is a diagram illustrating an example of the RIN spectrum of the fifth light in the optical interferometers according to the second and third embodiments.
FIG. 26B is a diagram illustrating an example of the RIN spectrum of the fifth light in the optical interferometers according to the second and third embodiments.
FIG. 27A is a diagram illustrating an example of the RIN spectrum of the fifth light in the optical interferometers according to the third and fourth embodiments.
FIG. 27B is a diagram illustrating an example of the RIN spectrum of the fifth light in the optical interferometers according to the third and fourth embodiments.
FIG. 28 is a diagram illustrating the comparison of exemplary RIN spectrums of the first light, the second light, and the fifth light in the optical interferometers according to the first and second embodiments.
FIG. 29 is a schematic diagram of an optical interferometer according to a fifth embodiment.
FIG. 30 is a schematic diagram of an optical interferometer according to a sixth embodiment.
FIG. 31 is a schematic diagram of an optical interferometer according to a seventh embodiment.
FIG. 32 is a diagram illustrating an example of the RIN spectrum of the fifth light in a seedless power-division interferometer having the configuration corresponding to the second embodiment.
FIG. 33 is a diagram illustrating an example of the power spectrum of the first light in a seedless power-division interferometer or in the optical interferometer according to the second embodiment.
FIG. 34 is a diagram illustrating an example of the RIN spectrum of the first light in a seedless power-division interferometer or in the optical interferometer according to the second embodiment.
FIG. 35 is a diagram illustrating an example of the RIN spectrum of the fifth light in the case in which an EDFA is substituted for the light source in the optical interferometer according to the second embodiment.
FIG. 36 is a diagram illustrating an example of the power spectrum of the first light that is output from the EDFA.
FIG. 37 is a diagram illustrating an example of the RIN spectrum of the first light that is output from the EDFA.
FIG. 38 is a schematic diagram of an optical interferometer system according to an eighth embodiment.

### Description of Embodiments

Exemplary embodiments of the present invention are described below with reference to the accompanying drawings. However, the present invention is not limited by the embodiments described below. Moreover, in the drawings, identical constituent elements are referred to by the same reference numerals, and the same explanation is not given in a repeated manner.

As the representative example of an incoherent light, the ASE (Amplified Spontaneous Emission) light of an EDFA (Erbium Doped Fiber Amplifier), an SOA (Semiconductor Optical Amplifier), and an SLD (Super Luminescent Diode) is known (Non Patent Literature 1). A coherence length lc indicating the coherency of a light is expressed as given below in Equation (1). ${l}_{c} \approx \frac{{λ}_{0}^{2}}{Δ λ}$ (1)

Herein, λ0 represents the central wavelength of the light, and Δλ represents the full width at half maximum (FWHM) of the spectrum of the light. For example, when the central wavelength λ0 is equal to 1425 nm and the FWHM Δλ is equal to 30 nm, the coherence length lc is equal to only 70 µm. Thus, wider the FWHM, the shorter becomes the coherent length. Moreover, in order to obtain a longer coherent length, it is necessary to narrow the FWHM. In the case of a laser light, since the power spectrum is often linear, the FWHM is sometimes called the linewidth.

The present inventors have disclosed the technology related to the RIN suppressed light in which the relative intensity noise (RIN) is suppressed (Patent Literature 1 to Patent Literature 3). When the RIN suppressed light was diligently studied, the present inventors found to their surprise that, regardless of having a wide FWHM, the RIN suppressed light has high coherence that is equivalent to a laser light having a relatively narrower linewidth. Then, the present inventors conceived of configuring a new and useful optical interferometer using the abovementioned RIN suppressed light as the light source, and accomplished the present invention.

### (First embodiment)

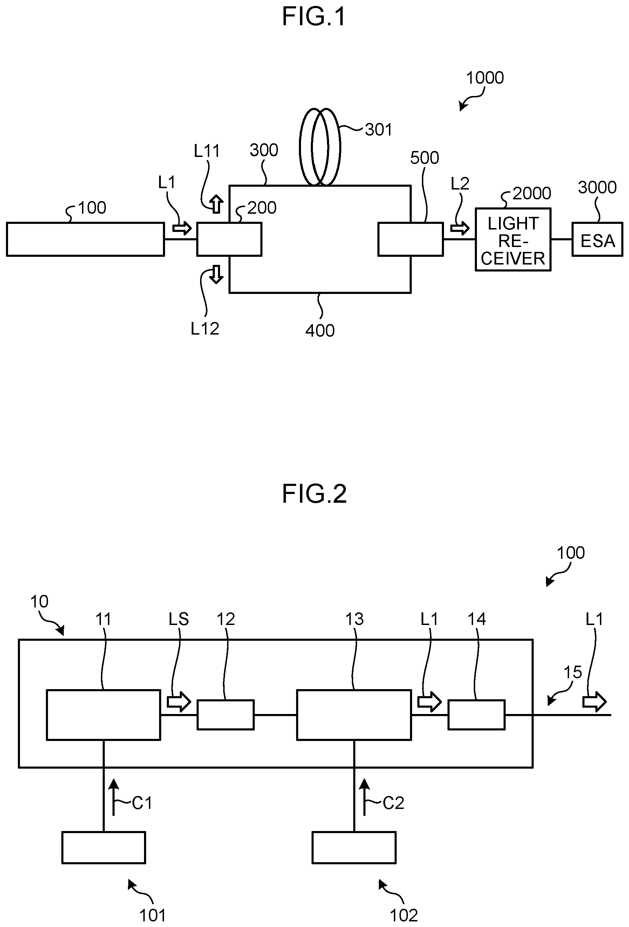

FIG. 1 is a schematic diagram of an optical interferometer according to a first embodiment. An optical interferometer 1000 according to the first embodiment includes a light source 100, a wavelength divider 200, a first optical path 300, a second optical path 400, and a wavelength multiplexer 500. The optical interferometer 1000 is connected to a light receiver 2000 and an electrical spectrum analyzer 3000 for the purpose of measuring the RIN spectrum. The optical interferometer 1000, the light receiver 2000, and the electrical spectrum analyzer 3000 constitute an optical interferometer system.

The light source 100 represents an example of a broadband light source that outputs a first light L1 which is a RIN suppressed light in which the relative intensity noise (RIN) in a predetermined frequency domain is suppressed. The first light L1 has a relatively wider FWHM.

The wavelength divider 200 receives input of the first light L1, performs wavelength division of the first light L1 into a first component L11 and a second component L12, and outputs those components. More particularly, the wavelength divider 200 outputs the first component L11 to the first optical path 300, and outputs the second component L12 to the second optical path 400. The second component L12 has a central wavelength different from a central wavelength of the first component L11. The wavelength divider 200 is configured using, for example, a WDM (Wavelength Division Multiplex) coupler.

In the first embodiment, the first optical path 300 is made of an optical fiber. The first optical path 300 includes, for example, an optical fiber 301 whose length is to measured (i.e., the optical fiber 301 representing the target for length measurement). The first component L11 propagates through the first optical path 300.

In the first embodiment, the second optical path 400 is made of an optical fiber. The second component L12 propagates through the second optical path 400. As compared to the optical path length of the first optical path 300, the second optical path 400 has a shorter optical path length by the length of the optical fiber 301.

The wavelength multiplexer 500 multiplexes the first component L11, which has propagated through the first optical path 300, and the second component L12, which has propagated through the second optical path 400; and outputs the multiplexed light as a second light L2. For example, the wavelength multiplexer 500 either can be configured using a WDM coupler, or can be configured using an optical coupler such as a 3dB-coupler that combines two lights at a predetermined power ratio.

The light receiver 2000 receives the second light L2 and outputs, to the electrical spectrum analyzer 3000, a current signal according to the received light intensity. Based on the current signal input thereto, the electrical spectrum analyzer 3000 measures the RIN spectrum of the second light L2. The electrical spectrum analyzer 3000 represents an example of an electrical spectrum analyzer that displays, in a frequency domain, the spectrum of the electrical signals input thereto.

The optical interferometer 1000 has a similar configuration to a Mach-Zehnder type optical interferometer, but differs from a Mach-Zehnder type optical interferometer at least in the way of including the wavelength divider 200 that performs wavelength division of the input light and outputs the components. In the following explanation, the configuration of the optical interferometer 1000 in which the wavelength divider 200 is included is sometimes referred to as a wavelength-division interferometer.

Given below is the explanation about the configuration and the characteristics of the light source 100. That is followed by the explanation about the characteristics of the first light L1, the first component L11, the second component L12, and the second light L2.

### <Configuration of light source>

FIG. 2 is a schematic diagram of the light source illustrated in FIG. 1. The light source 100 includes a light source module 10 and includes driving devices 101 and 102.

The light source module 10 includes a seed light source 11 representing an SOA; an optical isolator 12; a booster amplifier 13 representing an SOA; an optical isolator 14; and an output optical fiber 15. The seed light source 11, the optical isolator 12, the booster amplifier 13, and the optical isolator 14 are optically cascade-connected in that order using optical fibers or optical devices. That is, the light source module 10 includes cascade-connected SOAs.

The seed light source 11 outputs a seed light LS having a predetermined bandwidth. The seed light LS represents the ASE light of an SOA. The predetermined bandwidth represents a broadband having, for example, the wavelength band equal to or greater than 25 nm. The optical isolator 12 allows passage of the seed light LS and inputs it to the booster amplifier 13; as well as prevents the input of the feedback light, which travels back from the booster amplifier 13, to the seed light source 11. The optical isolator 12 prevents or mitigates the instability occurring in the operation of the seed light source 11 due to the input of the feedback light.

The booster amplifier 13 performs optical amplification of the seed light LS input thereto, and outputs the amplified light as the first light L1. The optical isolator 14 allows passage of the first light L1 and inputs it to the output optical fiber 15; as well as prevents the input of the light, which travels from the output optical fiber 15, to the booster amplifier 13. The optical isolator 14 prevents or mitigates the instability occurring in the operation of the booster amplifier 13 due to the input of the feedback light.

The output optical fiber 15 is an optical fiber for guiding the first light L1 to the outside of the light source module 10. That is, the light source 100 outputs the first light L1 to the outside.

The driving devices 101 and 102 are SOA driving devices of a known type. The driving device 101 supplies a driving current C1 to the seed light source 11. The driving device 102 supplies a driving current C2 to the booster amplifier 13.

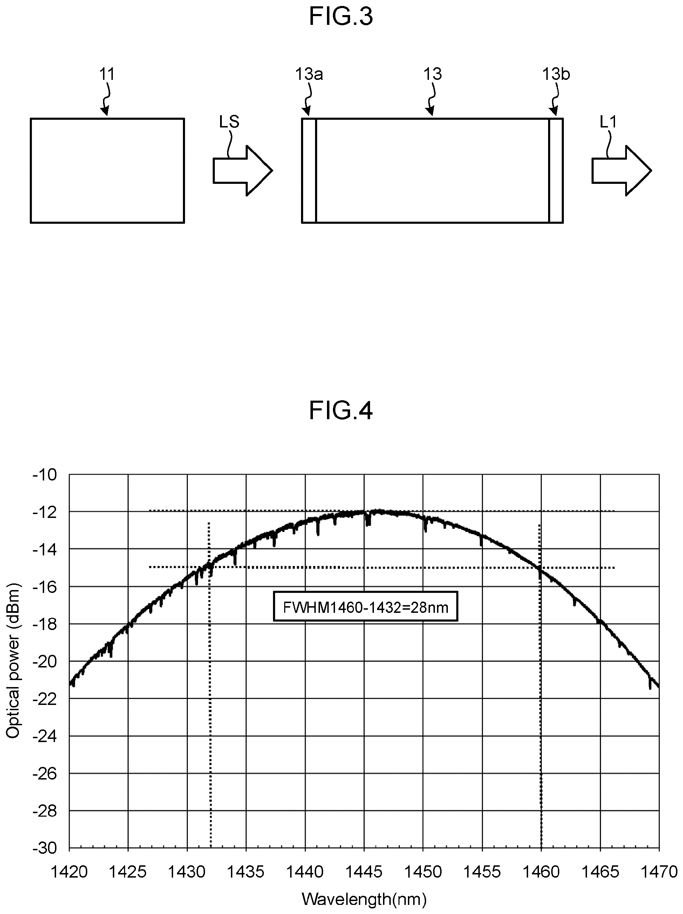

FIG. 3 is a diagram illustrating some part of the light source 100 illustrated in FIG. 2. The booster amplifier 13 includes a first end face 13a and a second end face 13b that are placed opposite to each other. The booster amplifier 13 receives input of the seed light LS from the first end face 13a, and outputs the first light L1 from the second end face 13b to the outside.

The first end face 13a and the second end face 13b are subjected to anti-reflection treatment such as an anti-reflection coating. The anti-reflection treatment can be performed by forming the first end face 13a and the second end face 13b to be inclined with respect to the optical axis of the optical amplifier waveguide included in the booster amplifier 13. Such a structure is also called an oblique waveguide structure.

### <Characteristics of light source>

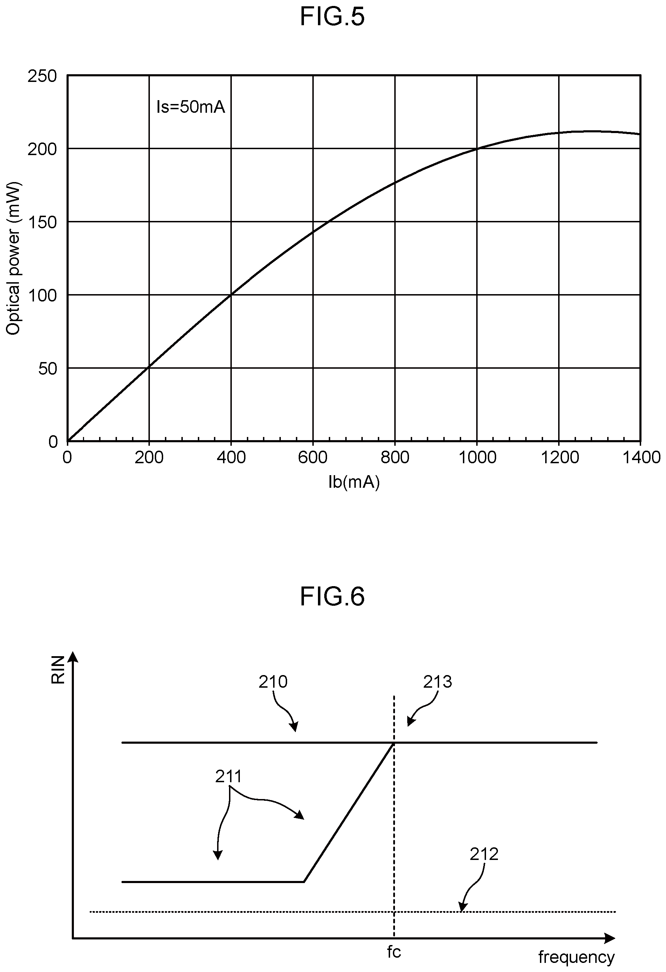

Given below is the explanation about the characteristics of the light source 100. FIG. 4 is a diagram illustrating an example of the power spectrum of the output light (the first light) of the booster amplifier. In FIG. 5 is illustrated the case in which, when the driving current C1 supplied to the seed light source 11 is referred to as Is and the driving current C2 supplied to the booster amplifier 13 is referred to as Ib, Is is set to 50 mA and Ib is set to 800 mA. The power spectrum of the output light illustrated in FIG. 4 mostly has the Gaussian spectral shape, has the central wavelength (which is measured using the RMS method) of 1445 nm, and has the FWHM of about 28 nm. Meanwhile, the beard-like fluctuations seen in the spectrum are caused by the absorption of moisture present in the measurement device.

FIG. 5 is a diagram illustrating an example of a power (Pf) of the first light with respect to Ib. With reference to FIG. 5, Is is set to 50 mA. In the case illustrated in FIG. 5, it can be seen that, when Ib is equal to 1000 mA, Pf is approximately equal to 200 mW. Meanwhile, FIGS. 4 and 5 correspond to an exemplary light source module manufactured using semiconductor optical amplifiers having substantially identical characteristics to the seed light source and the booster amplifier.

Herein, since the seed light LS is the ASE light and since the booster amplifier 13 is operating in the gain-saturated state, the first light L1 has the RIN in the suppressed state. Moreover, the first light L1 has a smooth wavelength spectrum (power spectrum) in which the ripples of FP (Fabry-Perot) oscillation are also held down (refer to Patent Literature 1 to Patent Literature 3).

FIG. 6 is a diagram that schematically illustrates the RIN spectrum in which the RIN is suppressed. In FIG. 6, the level of a line 210 represents the ASE-ASE beat noise level in the ASE light.

The ASE light of a normal SOA has the power spectrum width of a few tens of nanometers, which is equal to a few THz when expressed as the frequency. Since the measurement span of the RIN is sufficiently small at a few tens of GHz, the RIN is calculated using Equation (2) given below (Non Patent Literature 2).$RIN = 0.66 / Δ {v}_{ASE} \left[Hz-1\right]$(2)

Herein, 0.66 represents the coefficient in the case in which the power spectrum of the ASE light is a Gaussian light; and Δv_{ASE} represents the FWHM of that power spectrum.

For example, the output light illustrated in FIG. 4 has the power spectrum of the Gaussian type and has the FWHM approximately equal to 30 nm. Hence, using Equation (1) given above, the RIN is calculated to be approximately equal to -127 dB/Hz.

In contrast, the RIN of the first light L1, which is output from the light source 100, is suppressed in a low frequency domain 211 that is lower than a corner frequency 213. The low frequency domain 211 represents an example of a predetermined frequency domain. The low frequency domain 211, in which the RIN is suppressed, is also called a RIN suppressed domain.

In the present written description, suppression of the RIN implies that the RIN is suppressed to a greater extent as compared to the RIN calculated using Equation (2) given above. The amount of RIN suppression is defined as the amount by which the RIN decreases from the ASE-ASE beat noise level in the RIN suppressed domain. That amount of RIN suppression can be equal to or greater than 10 dB, or can be equal to or greater than 20 dB, or can be equal to or smaller than 30 dB, or can be equal to or greater than 40 dB.

Meanwhile, when fc [Hz] represents the value of the corner frequency 213, it is expressed using Equation (3) given below (refer to Patent Literature 3) .$fc = 1 / \left(D⋅Δλ⋅L\right)$ (3)

In Equation (3), when it is assumed that a particular light has the corner frequency after having it has propagated through a particular optical fiber, Δλ [nm] represents the full width at half maximum of the spectrum of that particular light; L [km] represents the length of the optical fiber; and D [ps/nm/km] represents the absolute value of the chromatic dispersion of that particular optical fiber at the central wavelength of that particular light. The corner frequency fc is, for example, equal to or greater than 1 GHz, but alternatively can be equal to or greater than 10 GHz, or can be equal to or greater than 20 GHz, or can be equal to or greater than 30 GHz, or can be equal to or greater than 40 GHz.

### <Characteristics of first light, first component, second component, and second light>

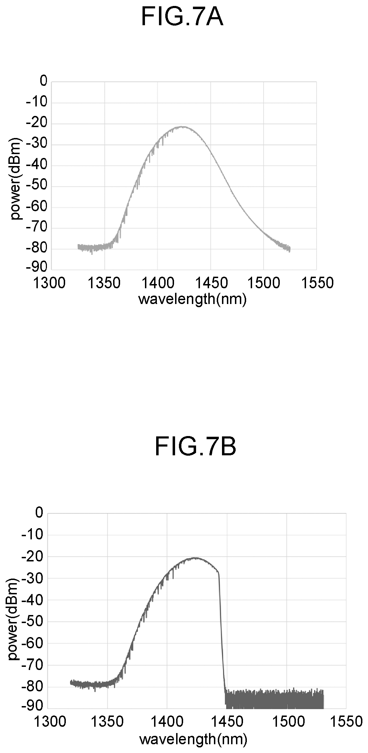

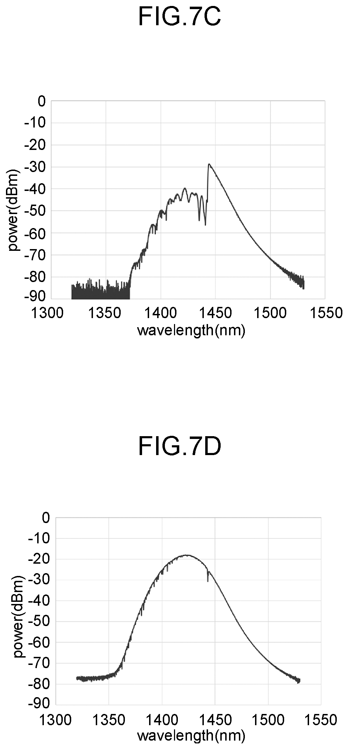

FIGS. 7A to 7D are diagrams illustrating examples of the power spectrum with respect to the wavelength of the first light, the wavelength of the first component, the wavelength of the second component, and the wavelength of the second light, respectively. In FIG. 7A is illustrated the power spectrum of the first light L1. In FIG. 7B is illustrated the power spectrum of the first component L11. In FIG. 7C is illustrated the power spectrum of the second component L12. In FIG. 7D is illustrated the power spectrum of the second light L2.

Regarding the second light, it should be noted that the first optical path does not include the target optical fiber for length measurement, and the power spectrum is measured in the state in which the optical path length of the first optical path is set to be substantially same as the optical path length of the second optical path.

In the example illustrated in FIG. 7A, the power spectrum of the first light L1 has the central wavelength of 1425 nm. The first component L11 and the second component L12 are the components obtained by dividing the first light L1 using the wavelength divider 200 and with the wavelength approximately equal to 1443 serving as the boundary. As a result, in FIG. 7D, a depression is illustrated at the position of the wavelength approximately equal to 1443 nm. That depression is sometimes called the point of wavelength division.

As can be seen in FIGS. 7B and 7C, the full width at half maximum of the power spectrum of the first component L11 is wider than the full width at half maximum of the power spectrum of the second component L12.

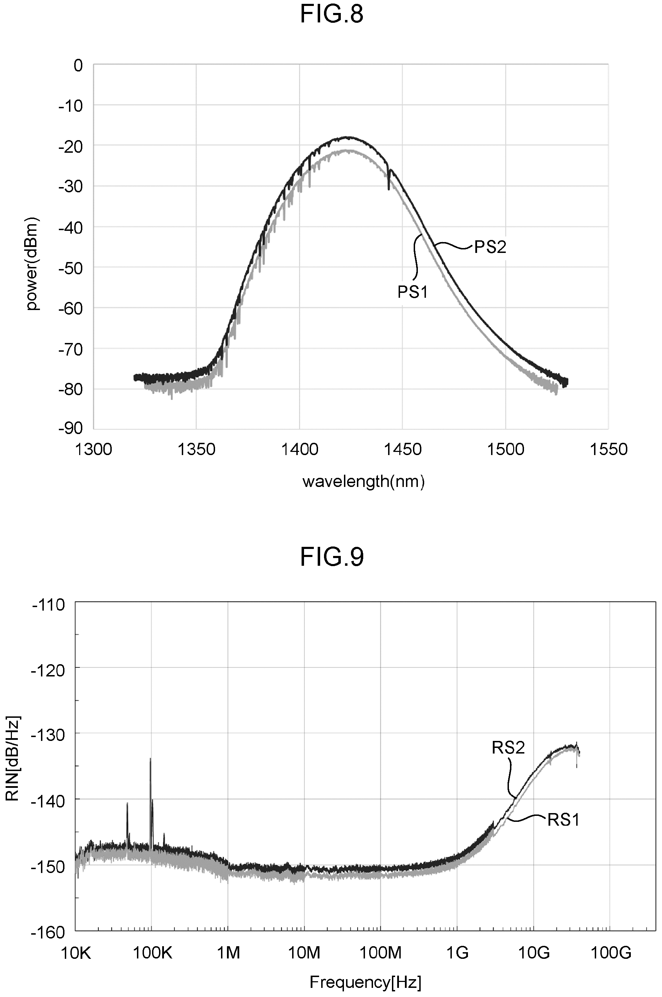

FIG. 8 is a diagram in which the power spectrum of the first light illustrated in FIG. 7A and the power spectrum of the second light illustrated in FIG. 7D are illustrated in an overlapped manner. As can be seen in FIG. 8, the shape of a power spectrum PS1 of the first light L1 is almost same as the shape of a power spectrum PS2 of the second light L2.

FIG. 9 is a diagram illustrating an example of the RIN spectrum of the first light and the RIN spectrum of the second light. As can be seen in FIG. 9, when the optical path length of the first optical path is substantially same as the optical path length of the second optical path, the shape of a RIN spectrum RS1 of the first light L1 is almost same as the shape of a RIN spectrum RS2 of the second light L2.

### <Characteristics of second light in case in which first optical path includes target optical fiber for length measurement>

Given below is the explanation about the characteristics of the second light L2 in the case in which the first optical path 300 includes the optical fiber 301 whose length is to be measured.

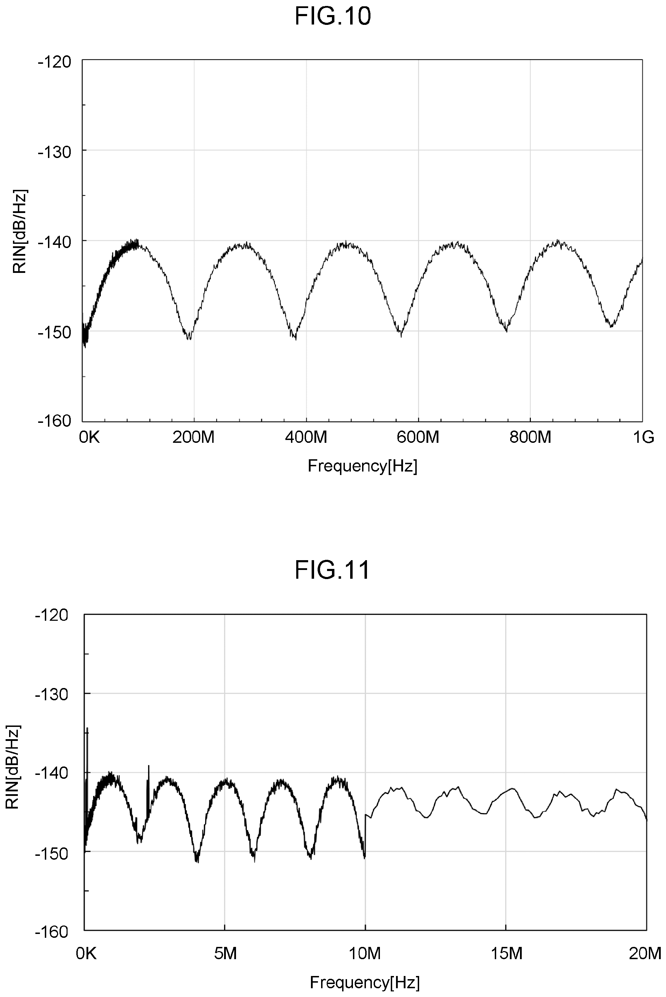

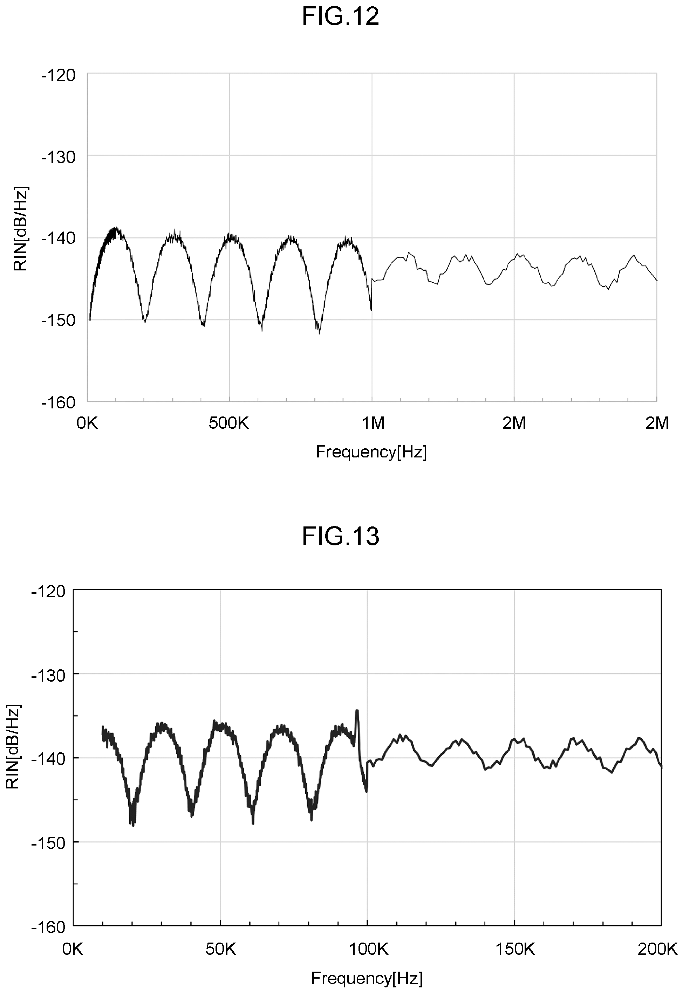

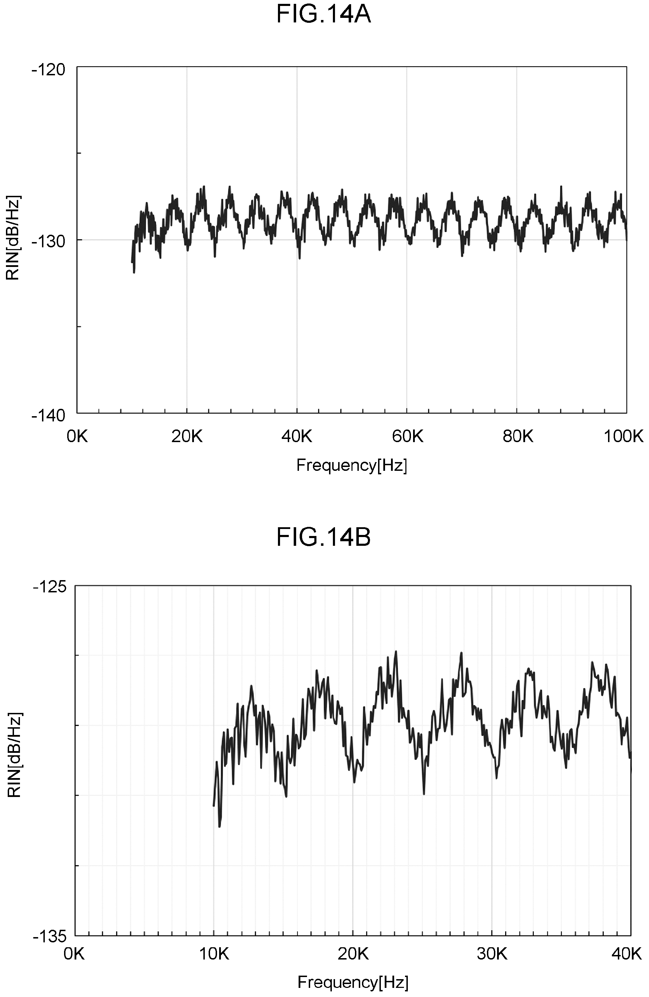

FIG. 10 is a diagram illustrating the ripples appearing in an example of the RIN spectrum of the second light in the case in which the target optical fiber for length measurement included in the first optical path has the length of 1 m. FIG. 11 is a diagram illustrating the ripples appearing in an example of the RIN spectrum of the second light in the case in which the target optical fiber for length measurement included in the first optical path has the length of 100 m. FIG. 12 is a diagram illustrating the ripples appearing in an example of the RIN spectrum of the second light in the case in which the target optical fiber for length measurement included in the first optical path has the length of 1 km. FIG. 13 is a diagram illustrating the ripples appearing in an example of the RIN spectrum of the second light in the case in which the target optical fiber for length measurement included in the first optical path has the length of 10 km. FIGS. 14A and 14B are diagrams illustrating the ripples appearing in an example of the RIN spectrum of the second light in the case in which the target optical fiber for length measurement included in the first optical path has the length of 40 km. FIG. 14B is a diagram in which some part of FIG. 14A is illustrated in an enlarged manner.

In the RIN spectrums illustrated in FIGS. 10 to 14A and 14B, frequency-wise periodic ripples are illustrated. However, the periodicity of the ripples differs according to the length of the optical fiber 301 whose length is to be measured.

Regarding the RIN spectrums illustrated in FIGS. 10 to 14A and 14B, the present inventors did the following analysis based on the FSR (Free Spectral Range) of the RIN spectrum measured in a known optical interferometer.

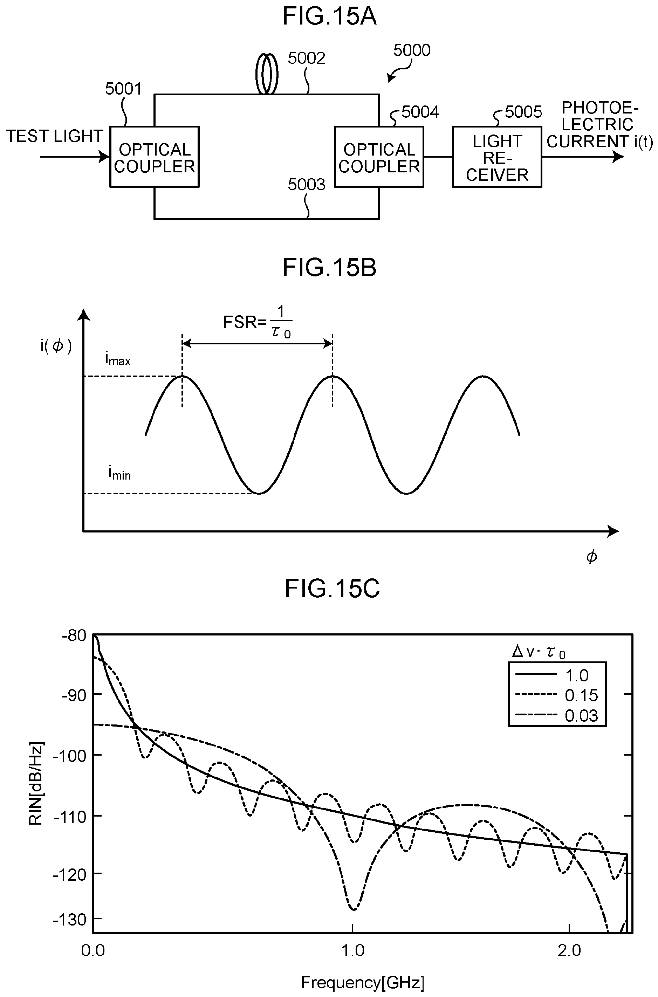

FIGS. 15A to 15C are diagrams for explaining about the FSR in an optical interferometer of the known type (also refer to Non Patent Literature 2). In FIG. 15A is illustrated a measurement system 5000 that includes a Mach-Zehnder optical interferometer of the known type. The measurement system 5000 includes an optical coupler 5001 that is a 3dB-coupler; a first optical path 5002; a second optical path 5003; an optical coupler 5004 that has an identical configuration and identical functions to the optical coupler 5001; and a light receiver 5005. Herein, it is assumed that the first optical path 5002 has a greater optical path length than the optical path length of the second optical path 5003. The measurement system 5000 configured as above is also used at the time of measuring the linewidth of the test light. For example, such a linewidth measurement method is widely implemented for evaluating the performance of a signal laser in optical fiber communication, particularly in a digital coherent communication system.

Upon receiving input of the test light, the optical coupler 5001 divides the test light into a first component and a second component at a predetermined power ratio. The first component propagates through the first optical path 5002, and the second component propagates through the second optical path 5003. The optical coupler 5004 combines the first component, which has propagated through the first optical path 5002, and the second component, which has propagated through the second optical path 5003; and outputs the combined light to the light receiver 5005. The light receiver 5005 receives the combined light and outputs a current signal i(t) according to the received light intensity. Herein, t represents the time.

Moreover, i(t) represents the function corresponding to a phase different ϕ between the first component and the second component in the combined light. More particularly, as illustrated in FIG. 15B, the function i(t) varies in a periodic manner with respect to the phase difference ϕ. Thus, i(t) can also be written as i(ϕ). As given below in Equation (4), the FSR is defined using the interval between the peaks of i(ϕ). Herein, τ₀ represents the delay period of the first component, which propagates through the first optical path 5002, with respect to the second component, which propagates through the second optical path. $FSR = 1 / {τ}_{0}$ (4)

According to Non Patent Literature 2, when Δν represents the frequency-wise linewidth (FWHM) of the test light, Δv can be expressed using the RIN as a result of mathematically processing i(t). To begin with, E_{T} represents the electric field input to the light receiver 5005 and is expressed using Equation (5) given below. ${E}_{T} = \sqrt{{P}_{1}} {e}^{j \left(2{πν}_{0}t+ϕ\left(t\right)\right)} + \sqrt{{P}_{2}} {e}^{j \left(2{πν}_{0}\left(t+{τ}_{0}\right)+ϕ\left(t+{τ}_{0}\right)\right)}$ (5)

Herein, P1 and P2 represent the power of the first component and the second component, respectively; and v₀ represents the central frequency of the test light.

Meanwhile, i(t) is expressed using Equation (6) given below. $i \left(t\right) = R {\left|{E}_{T}\right|}^{2}$ (6)

Herein, R[A/W] represents the sensitivity of the light receiver 5005.

Then, the autocorrelation function of i(t) is obtained, Fourier transform of that autocorrelation function is performed according to the Wiener-Khintchine theorem, and a spectrum density Sᵢ is obtained. Thus, Sᵢ(f) is expressed using Equation (7) given below. ${S}_{i} \left(f\right) = {S}_{dc} \left(f\right) + {S}_{shot} \left(f\right) + {S}_{mix} \left(f\right)$ (7)

In Equation (6), the first term on the right side represents the current component of the received light power, the second term represents the shot noise component, and the third term represents the interference component. Moreover, f [Hz] represents the frequency representing the horizontal axis of the RIN spectrum that is obtained as a result of measuring i(t) using an electrical spectrum analyzer.

Meanwhile, Sₘᵢₓ(f) is expressed using Equation (8) given below. ${S}_{mix} = \frac{8 {R}^{2} {P}_{1} {P}_{2} {π}^{- 1} Δ {ν}^{- 1} {e}^{- 2 π Δ {ντ}_{0}}}{1 + {\left(\frac{f}{Δ ν}\right)}^{2}} \left[\begin{matrix}cosh \left(2πΔ{ντ}_{0}\right) \\ - cos \left(2{πfτ}_{0}\right) + {cos}^{2} \left(2πΔ{ντ}_{0}\right) \left\{cos\left(2{πfτ}_{0}\right)-\frac{Δ ν sin \left(2{πfτ}_{0}\right)}{f}-{e}^{- 2 π Δ {ντ}_{0}}\right\}\end{matrix}\right]$ (8)

Moreover, RIN [Hz₋₁] represents the amount obtained by the power spectrum density by the square of the average power.

Equation (8) can be divided by cases with Δv·τ₀ serving as the parameter. That is, FIG. 15C is a diagram illustrating the RIN spectrum in the case in which Δv is equal to 30 MHz. However, when Δv·τ₀≥1 holds true, no ripples appear in the RIN spectrum as illustrated in FIG. 15C. In that case, the linewidth of the test light can be obtained from the RIN spectrum (refer to Non Patent Literature 3, Non Patent Literature 4, and Non Patent Literature 5 as detailed research papers). In order to satisfy this inequality condition, it is clear that, if the test light has a narrow linewidth Δv, the delay period τ₀ needs to be increased. On the other hand, when Δv·τ₀<1 holds true, ripples appear in the RIN spectrum as illustrated in FIG. 15C due to the interference. Regarding the ripples appearing at that time, the frequency interval is equal to 1/τ₀. In the present written description, the frequency interval of the ripples can also be called the FSR.

The method explained above is applied with respect to the result obtained with reference to FIGS. 10 to 14A and 14B. Firstly, the delay period attributed to the target optical fiber for length measurement is expressed using Equation (9) given below. ${τ}_{0} = L / \left(c/n\right)$ (9)

Herein, L represents the length of the target optical fiber for length measurement, c represents the velocity of light in vacuum, and n represents the effective refractive index of the target optical fiber for length measurement. Thus, L represents an example of the optical path difference, and n represents an example of the effective refractive index of the optical paths making up the optical path difference.

Subsequently, the FSR was calculated using Equations (4) and (9); and the calculated values were compared with the measured values of the FSR as measured from the interval between the ripples illustrated in FIGS. 10 to 14A and 14B. The results are given in Table 1. Meanwhile, in the calculated values, n is set to 1.45. As given in Table 1, the measured values and the calculated values matched adequately.

### [Table 1]

**Table 1**

| L (km) | FSR(Hz) (measured value) | FSR(Hz) (calculated value) |
|---|---|---|
| 0.001 | 200M | 207M |
| 0.1 | 2M | 2.07M |
| 1 | 200k | 207k |
| 10 | 20k | 20.7k |
| 40 | 5k | 5.17k |

From the results given above, as illustrated in FIGS. 4, 7, and 8, the RIN suppressed light can be said to have an extremely unique property of exhibiting high coherency regardless of the fact that the FWHM is large to be approximately equal to 30 nm. Moreover, according to FIGS. 14A and 14B, even when there is a length difference of 40 km between the first optical path 300 and the second optical path 400, ripples are still observed in the RIN spectrum. As given above in Equation (8), the fact that there is interference even with the length difference of 40 km implies that Δv·τ₀<1 holds true and Δv<5 kHz holds true. In terms of having a laser as the light source, the abovementioned fact is equivalent to having the linewidth to be smaller than 5 kHz. Of course, generally, since the ASE light has a wide FWHM, there is no concept of the linewidth. However, from the perspective of the interference, it is possible to think that the RIN suppressed light exhibits characteristics that are comparable to a laser light that equivalently has the linewidth to be smaller than 5 kHz. Even though the results given above are far from the characteristics of the ASE light that were widely believed to be true in the past, they happen to be experimental facts.

In the present written description, in the case in which the first light L1 is input to the optical interferometer 1000 as illustrated in FIG. 1, when ripples are recognized in the RIN spectrum as illustrated in FIGS. 10 to 14A and 14B, it is written that the first light L1 has coherency or that an interference has occurred in the first light L1.

Based on the results given above, in the optical interferometer 1000 according to the first embodiment, by making use of the fact that the RIN suppressed light output by the light source 100 exhibits an extremely unique property of having high coherency comparable to a laser light having an extremely narrow linewidth, the length of the optical fiber 301 can be measured over a wide measurement range (for example, from a few centimeters to a few tens of kilometers or more), and thus the optical interferometer 1000 becomes applicable to a variety of uses. Moreover, the light source 100, in which the ASE light is used as the seed light source, is extremely compact and simple as compared to a laser device that outputs a laser light having a comparable linewidth. Thus, the optical interferometer 1000 has a compact and simple configuration and is applicable to a variety of uses.

In the optical interferometer 1000, the light source 100 can be a continuous wave (CW) light source, and the first light L1 can be a CW light. In that case, as compared to the case in which the first light L1 is an optical pulse, it is beneficial from the point of view of the light sensitivity in the light receiver 2000, without causing any drop in the average power of the second light L2.

Meanwhile, in the first embodiment described above, the full width at half maximum of the power spectrum of the first component L11 is wider than the full width at half maximum of the power spectrum of the second component L12. However, the present invention is not limited to that case. Alternatively, the full width at half maximum of the power spectrum of the second component L12 can be wider than the full width at half maximum of the power spectrum of the first component L11.

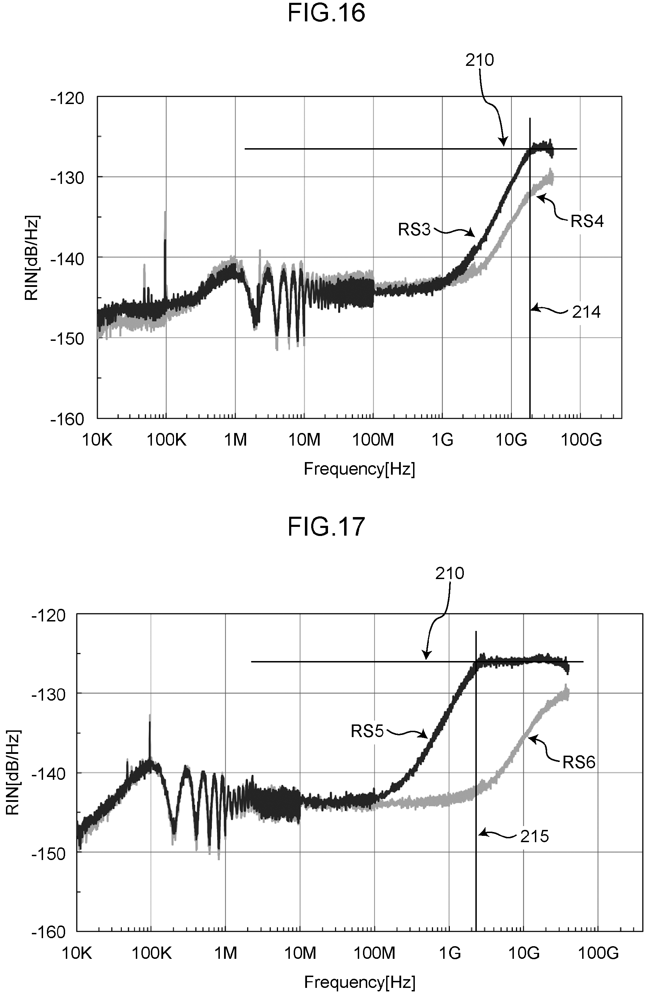

FIG. 16 is a diagram illustrating examples of the RIN spectrum of the second light in the optical interferometer according to the first embodiment in the cases in which, when the target optical fiber for length measurement in the first optical path has the length of 100 m, the first component and the second component are not swapped and are swapped.

The case in which the first component L11 and the second component L12 are not swapped is the case in which the first component L11 propagates through the first optical path 300 and the second component L12 propagates through the second optical path 400. The case in which the first component L11 and the second component L12 are swapped is the case in which the first component L11 propagates through the second optical path 400 and the second component L12 propagates through the first optical path 300.

A RIN spectrum RS3 is the RIN spectrum in the case in which the first component and the second component are not swapped, and a RIN spectrum RS4 spectrum is the RIN spectrum in the case in which the first component and the second component are swapped. Moreover, a line 214 indicates the position of the corner frequency of the RIN spectrum RS3. Regarding the RIN spectrum RS4, the corner frequency is not detected and is believed to be equal to or greater than 40 GHz. The result illustrated in FIG. 16 indicates that the RIN suppressed region is wider when the first component and the second component is swapped, that is, when the full width at half maximum of the power spectrum of the first component L11 is narrower than the full width at half maximum of the power spectrum of the second component L12. That corresponds to the fact that, in Equation (3), smaller the value of Δλ, the greater (higher) is the corner frequency fc.

FIG. 17 is a diagram illustrating examples of the RIN spectrum of the second light in the optical interferometer according to the first embodiment in the cases in which, when the target optical fiber for length measurement has the length of 1 km, the first component and the second component are not swapped and are swapped.

A RIN spectrum RS5 is the RIN spectrum in the case in which the first component and the second component are not swapped, and a RIN spectrum RS6 is the RIN spectrum in the case in which the first component and the second component are swapped. Moreover, a line 215 indicates the position of the corner frequency of the RIN spectrum RS5. Regarding the RIN spectrum RS6, the corner frequency is not detected and is believed to be equal to or greater than 40 GHz. The result illustrated in FIG. 17 too indicates that the RIN suppressed region is wider when the full width at half maximum of the power spectrum of the first component L11 is narrower than the full width at half maximum of the power spectrum of the second component L12. That corresponds to the fact that, in Equation (3), smaller the value of Δλ, the greater (higher) is the corner frequency fc. Moreover, when FIG. 16 is compared with FIG. 17, it is indicated that the RIN suppressed region becomes narrower when the optical path length difference between the first optical path 300 and the second optical path 400 increases. That corresponds to the fact that, in Equation (3), greater the value of L, the smaller (lower) is the corner frequency fc.

Thus, in order to secure a frequency-wise wide bandwidth of interference, it is desirable to configure the optical interferometer 1000 in such a way that, of the first component and the second component, the component having the narrower FWHM is input to the optical path in which the target optical path for length measurement is included.

Meanwhile, from FIGS. 16 and 17, the present inventors found out that the ripples in the RIN spectrum occur only in the RIN suppressed region having the frequency equal to or lower than the corner frequency, and found out that there are no ripples in the frequencies higher than the corner frequency. Hence, it can be said that the RIN suppressed light has significantly different characteristics than the normal laser light, such as having the property of the coherent light in which interference occurs in the domain lower than the corner frequency, and having the property of the incoherent light in the domain higher than the corner frequency.

### <Variation in RIN spectrum of second light in response to variation in Is or Ib>

In FIG. 10 is illustrated the condition of the ripples occurring in the RIN spectrum in the optical interferometer 1000 in the case in which the target optical fiber for length measurement has the length of 1 m, the driving current Is that is supplied to the seed light source 11 is equal to 100 mA, and the driving current Ib that is supplied to the booster amplifier 13 is equal to 1000 mA. The following explanation is given about the variation occurring in the RIN spectrum when the driving current Is is varied.

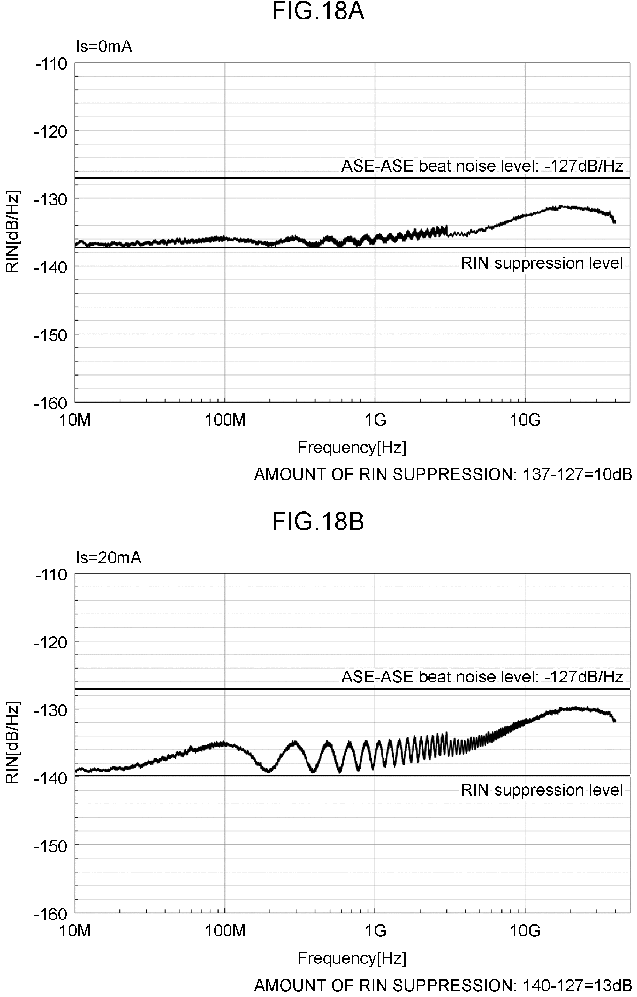

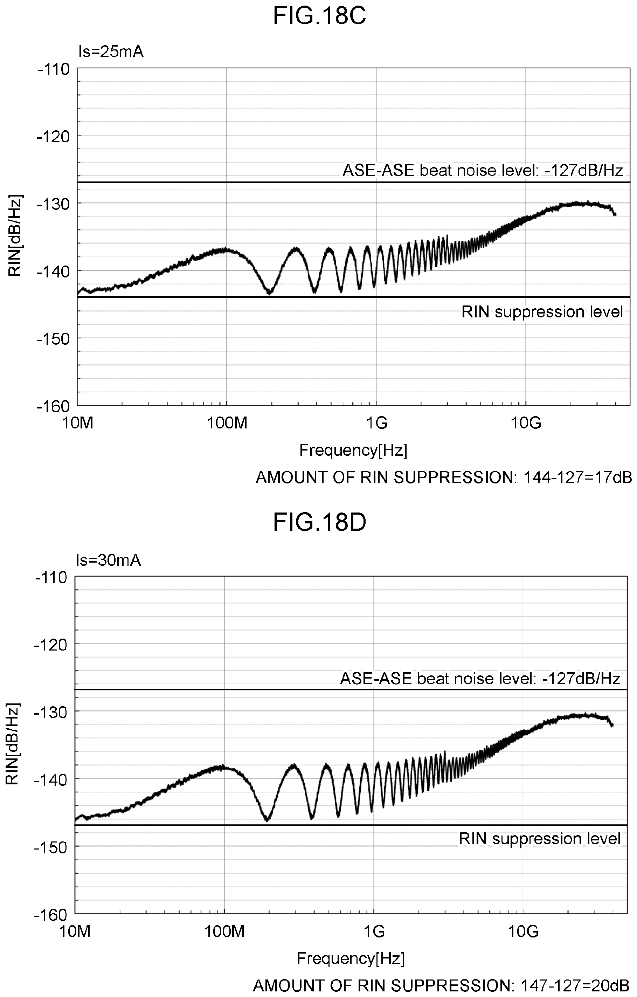

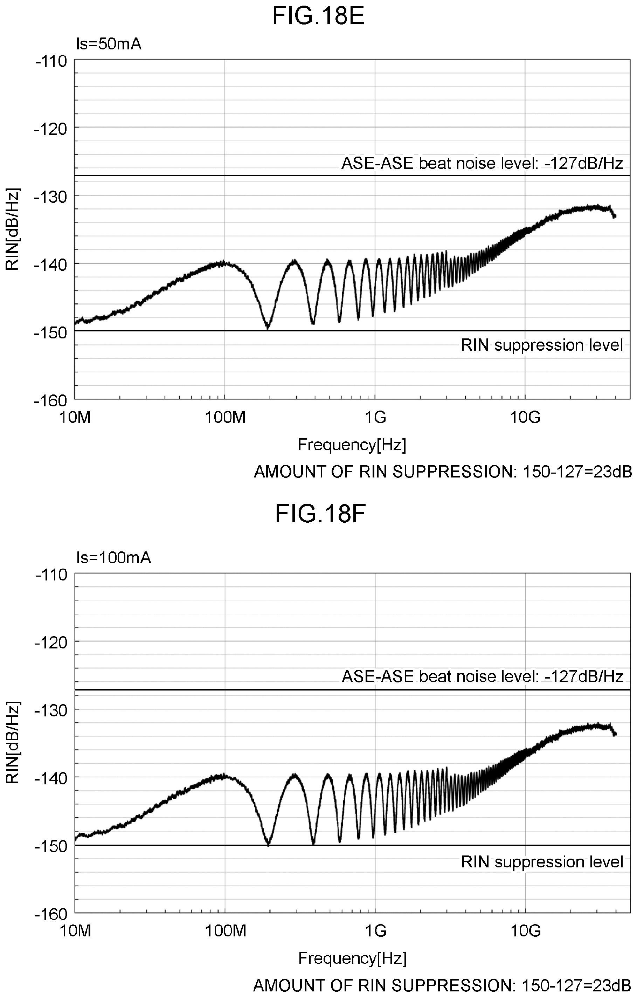

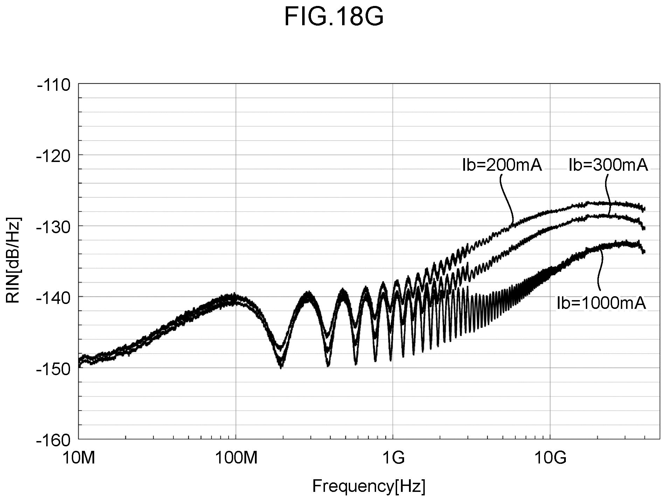

FIGS. 18A, 18B, 18C, 18D, 18E, and 18F are diagrams illustrating the RIN spectrums in the cases in which the driving current Is is set to 0 mA, 20 mA, 25 mA, 30 mA, 50 mA, and 100 mA, respectively, and the driving current Ib is set to 1000 mA. FIG. 18G is a diagram illustrating the RIN spectrums in the cases in which the driving current Is is set to 100 mA and the driving current Ib is set to 200 mA, 300 mA, and 1000 mA.

As illustrated in FIGS. 18A to 18F, when the driving current Is is increased, the RIN gets suppressed and the ripple amplitude increases. In the concerned drawings, the solid lines indicate the ASE-ASE beat noise level (-127 dB/Hz) and the level of the suppressed RIN (RIN suppression level). The difference between those two levels represents the amount of RIN suppression. For example, when Is=0 mA holds true with reference to FIG. 18A, the level of the suppressed RIN is equal to -137 dB/Hz, and hence the amount of RIN suppression is equal to 10 dB and the ripple amplitude is also small. However, when Is=100 mA holds true with reference to FIG. 18F, the level of the suppressed RIN is equal to -150 dB/Hz, and hence the amount of RIN suppression reaches 23 dB and the ripple amplitude also increases in a significant way.

In the cases illustrated in FIGS. 18A to 18F, since the first light has the FWHM of about 28 nm, the level of ASE-ASE beat noise representing the RIN upper limit value is equal to -127 dB/Hz. The RIN upper limit value is dependent on the FWHM of the first light. When the first light has the FWHM of 5 nm, the RIN upper limit value is approximately equal to -120 dB/Hz. In that case, the amount of RIN suppression reaches (150-120)=30 dB. Moreover, when the level of the suppressed RIN is equal to -160 dB/Hz, the amount of RIN suppression reaches (140-120)=40 dB.

As illustrated in FIG. 18G, when the driving current Ib is small, the corner frequency is low. However, when the driving current Ib increases, the corner frequency becomes higher. In the RIN spectrum, the ripples occur only in the RIN suppressed region having the frequency equal to or lower than the corner frequency. Hence, when the corner frequency is low, the measurement becomes difficult in the case in which the optical fiber 301 is short in length. Thus, in order to secure a wider measurement range, it is desirable that the driving current Ib is set to be sufficiently large and the booster amplifier 13 is operated in the state of having high gain saturation.

### <Regarding FWHM of first light>

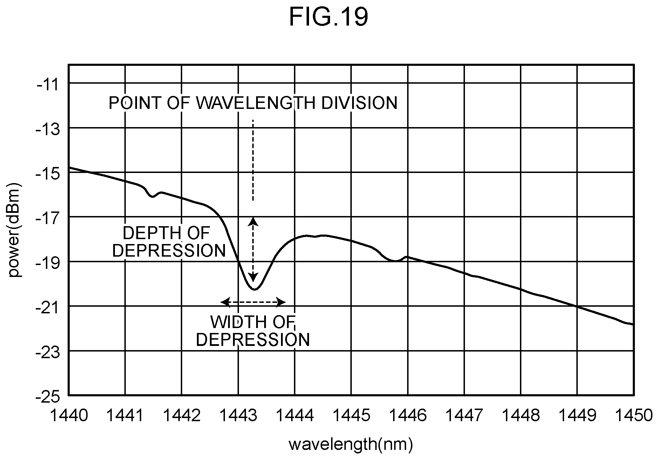

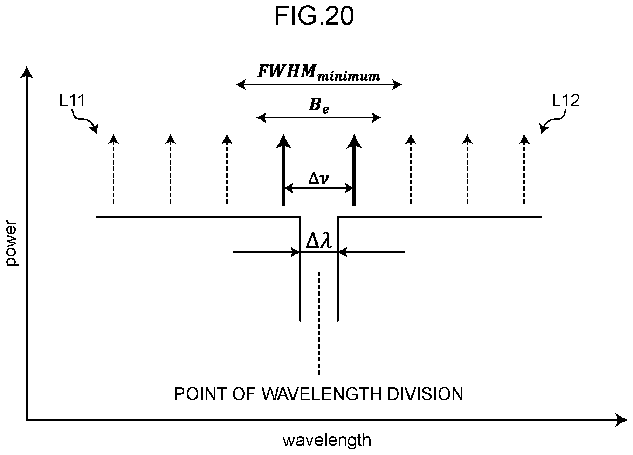

FIG. 19 is a diagram illustrating, in an enlarged manner, the surrounding of the depression (the point of wavelength division) present at the wavelength approximately equal to 1443 nm of the wavelength spectrum illustrated in FIG. 7D. In order to have the interference established in a wavelength-division interferometer such as the optical interferometer 1000, at least one pair of modes need to be present across the point of wavelength division, and the frequency difference between those modes needs to be within the bandwidth of the light receiver 2000. Moreover, the first light L1 needs to have two or more modes and needs to have the FWHM at around a level that enables wavelength division within the bandwidth of the light receiver 2000. FIG. 20 is diagram illustrating the criteria for the establishment of the interference in a wavelength-division interferometer. With reference to FIG. 20, the short wavelength side with respect to the point of wavelength division represents the first component L11 and the long wavelength side with respect to the point of wavelength division represents the second component L12. Moreover, thick arrows represent at least one pair of modes present across the point of wavelength division, and dashed arrows represent the other modes. Furthermore, Bₑ, Δv, Δλ, and FWHMₘᵢₙᵢₘᵤₘ respectively represent the bandwidth, the interval between the modes, the wavelength blocking width of the wavelength divider 200, and the minimum FWHM of the light source.

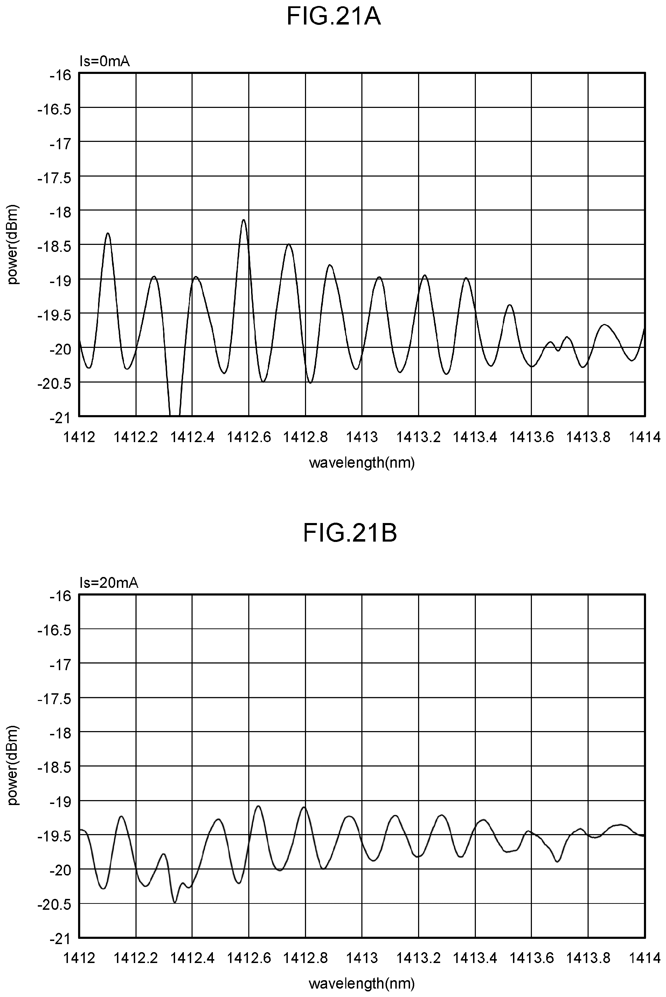

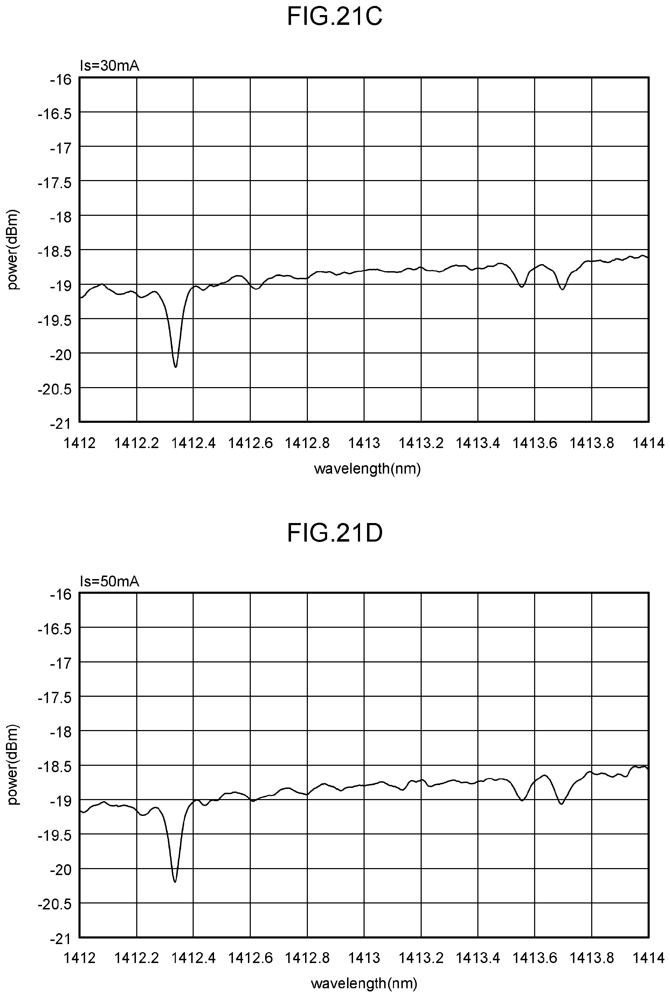

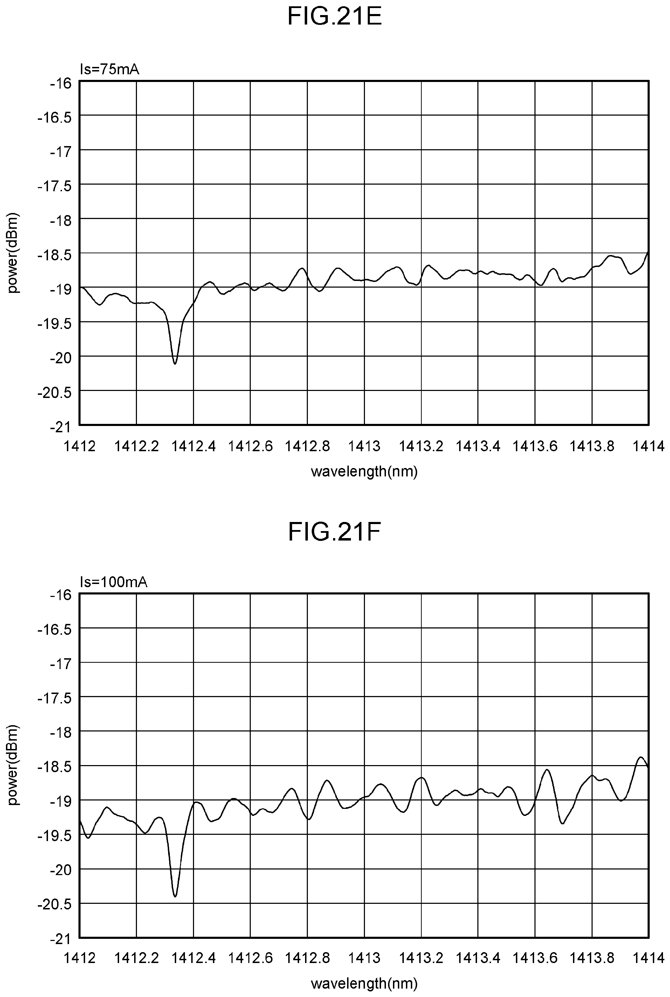

FIGS. 21A to 21F are diagrams in which the power spectrum of the first light L1 in the optical interferometer 1000 is illustrated in an enlarged manner in the cases in which the driving current Is is respectively set to 0 mA, 20 mA, 30 mA, 50 mA, 75 mA, and 100 mA. Herein, the driving current Ib is set to 1000 mA.

In FIGS. 21A to 21F, periodic ripples appear on the power spectrum of the light. The wavelength interval between those ripples is equal to 0.2 nm. Such ripples are believed to occur based on the FP modes resulting from the Fabry-Perot (FB) resonation formed either by the reflection occurring on both end faces of the SOA represented by the booster amplifier 13 or by the reflection occurring in the optical components adjacent to those both end faces. Even when the reflection occurring on both end faces of the SOA or the reflection occurring in the optical components adjacent to those both end faces is suppressed as much as possible, it is practically impossible to nullify the FP modes.

The fact that such ripplers occur simultaneously with the RIN suppression has already been disclosed by the present inventors (refer to Patent Literature 1).

As can be seen from FIGS. 21A to 21F, when the driving current Is is increased, the amplitude of the ripples decreases when the driving current Is is increased from 20 mA to 30 mA, and then tends to again increase when the driving current Is increased from 50 mA to 75 mA.

Thus, when the driving current is set to an appropriate value (in this case, for example, between 30 mA to 50 mA), the ripples are suppressed and the spectrum becomes smooth (see FIG. 4). However, even when suppressed, those ripples are estimated to be present as FP modes buried in the ASE light. As a result, since the ASE-ASE beat noise is suppressed in the RIN suppression region, the beat signals among the FP modes can be extracted.

When the wavelength interval between the ripples is approximately equal to 0.2 nm as explained above, the beat frequency (i.e., the mode interval between the FP modes) is approximately equal to 25 GHz. Hence, in order for the light receiver 2000 to detect the beat frequency, the light receiver 2000 needs to have the bandwidth equal to or greater than 25 GHz. Meanwhile, in the experiment whose results are disclosed in the present written description, as can be seen from FIG. 9 too, a light receiver capable of detecting the signals of 40 GHz was used.

By taking into account the points explained above, the following explanation is given about an example of the desirable FWHM of the first light. Firstly, by taking into account FIGS. 7B to 7D and FIG. 19 as well as by taking into account the implementable wavelength-division characteristics of the wavelength divider 200, it is desirable that the FWHM is equal to or greater than 5 nm. However, in FIG. 19 too, since the width of the depression is equal to or greater than 0.2 nm, a plurality of modes is present inside the depression. Moreover, by taking into account the fact that the depression leads to attenuation in the power of the modes contributing in the interference and hence the amplitude of the beat signals becomes smaller, it is desirable that the wavelength divider 200 has sufficient wavelength blocking characteristics and that the width of the depression is narrower and the depth of the depression is deeper.

On the other hand, when the FWHM of the first light L1 is comparatively wider, the power for each mode becomes comparatively smaller. Moreover, considering the bandwidth of the light receiver 2000, at the most two modes that are present across the point of wavelength division are contributing to the interference, and the other modes included in the first component or the second component either do not contribute to the interference or are undetectable even if they are contributing. In that regard, in order to sufficiently secure the power for each mode, it is desirable to have the FWHM to be equal to or smaller than 30 nm. Thus, the FWHM can be equal to or smaller than 25 nm, or can be equal to or smaller than 20 nm, or can be equal to or smaller than 15 nm, or can be equal to or smaller than 10 nm. When the FWHM is narrow and the power for each mode is large, it proves beneficial even in the case in which, for example, the measurement distance (the length of the target optical fiber for measurement) is long and a large optical loss occurs.

Meanwhile, when the spectral shape of the first light L1 is, for example, a Gaussian shape, the power distribution to each mode becomes easier to control according to the point of wavelength division.

### <Polarization dependency>

The present inventors set up an experiment system in which the length of the optical fiber 301 was set to 1 m and a polarization controller was inserted in the first optical path 300 and in the second optical path 400 of the optical interferometer 1000 according to the first embodiment. Then, in the experiment system, in the state in which the polarization state of the first component L11 and the polarization state of the second component L12 are matched just before the wavelength multiplexer 500 and in the state in which the polarization states are orthogonalized, the manner of variation in the RIN spectrum was measured.

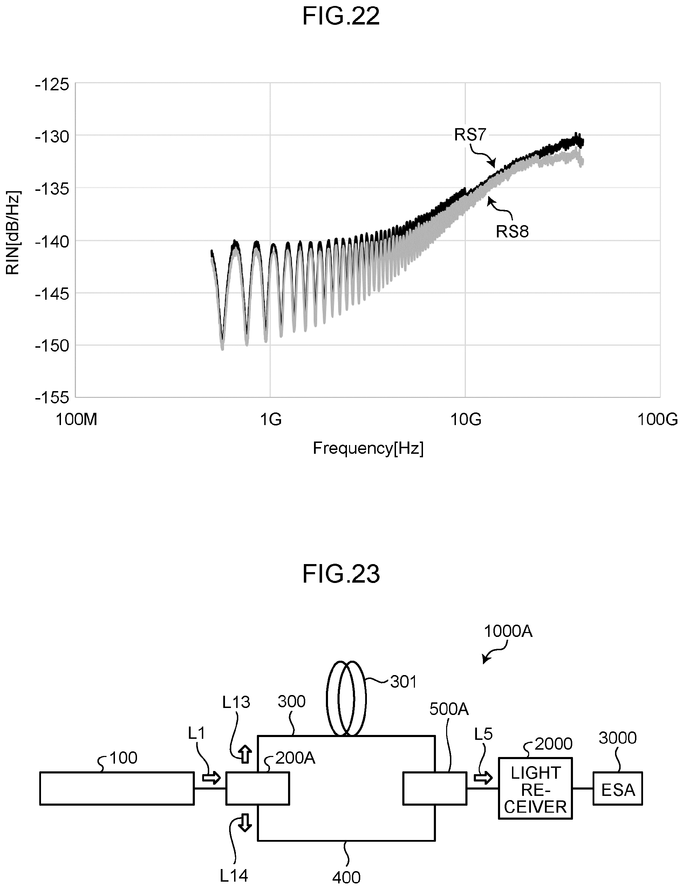

FIG. 22 is a diagram illustrating an example of the RIN spectrum of the second light when, in the case in which the target optical fiber for length measurement included in the first optical path has the length of 1 m, the relationship between the polarization of the first component and the polarization of the second component is changed. With reference to FIG. 22, a RIN spectrum RS7 represents the orthogonalized polarization states, and a RIN spectrum RS8 represents the matched polarization states. As illustrated in FIG. 22, in the RIN suppressed light, it was experimentally found that there is no significant difference in the interference characteristics when the polarization states are matched and when the polarization states are orthogonalized.

Generally, interference occurs when there is a match in the polarization of lights. That is, it is widely understood that interference does not occur in mutually orthogonal polarization. In contrast, the estimated reason for achieving the result illustrated in FIG. 22 is the fact that the power spectrum of the first light L1 representing the RIN suppressed light is wide and hence the polarization gets scrambled merely when, of the optical fiber connecting the light source 100 and the wavelength divider 200, propagation occurs through an extremely short optical fiber such as the portion not representing the polarization-maintaining fiber. That is an extremely meaningful property from a practical standpoint. As a particularly conspicuous phenomenon in an optical fiber, the light undergoes frequency variation in the polarization state during the propagation. Hence, in order to achieve the interference state with excellent sensitivity, the polarized lights need to be controlled and matched. However, that is not required in the optical interferometer 1000 according to the first embodiment in which the RIN suppressed light is used. That is, the first optical path 300 and the second optical path 400 can achieve the interference state without having to include a polarization control mechanism such as a polarization controller.

### (Second, third, and fourth embodiments)

Given below is the explanation about optical interferometers according to second, third, and fourth embodiments. In the following explanation, after explaining about the optical interferometers according to the second, third, and fourth embodiments; the explanation is given about the characteristics of the optical interferometers according to the second, third, and fourth embodiments.

### <Configuration according to second embodiment>

FIG. 23 is a schematic diagram of the optical interferometer according to the second embodiment. An optical interferometer 1000A according to the second embodiment is configured by substituting a power divider 200A for the wavelength divider 200 in the optical interferometer 1000 according to the first embodiment, and by substituting a power combiner 500A for the wavelength multiplexer 500 in the optical interferometer 1000 according to the first embodiment. The optical interferometer 1000A, the light receiver 2000, and the electrical spectrum analyzer 3000 constitute an optical interferometer system.

The power divider 200A receives input of the first light L1 from the light source 100, performs power division of the first light L1 into a third component L13 and a fourth component L14, and outputs those components. The power divider 200A outputs the third component L13 to the first optical path 300, and outputs the fourth component L14 to the second optical path 400. The power divider 200A is configured using, for example, an optical coupler that divides two lights at a predetermined power ratio. That optical coupler can be, for example, a 3dB-coupler.

The power combiner 500A combines the third component L13, which has propagated through the first optical path 300, and the fourth component L14, which has propagated through the second optical path 400; and outputs the combined light as a fifth light L5. The power combiner 500A is configured using, for example, an optical coupler that combines two lights at a predetermined power ratio. That optical coupler can be, for example, a 3dB-coupler.

### <Configuration according to third embodiment>

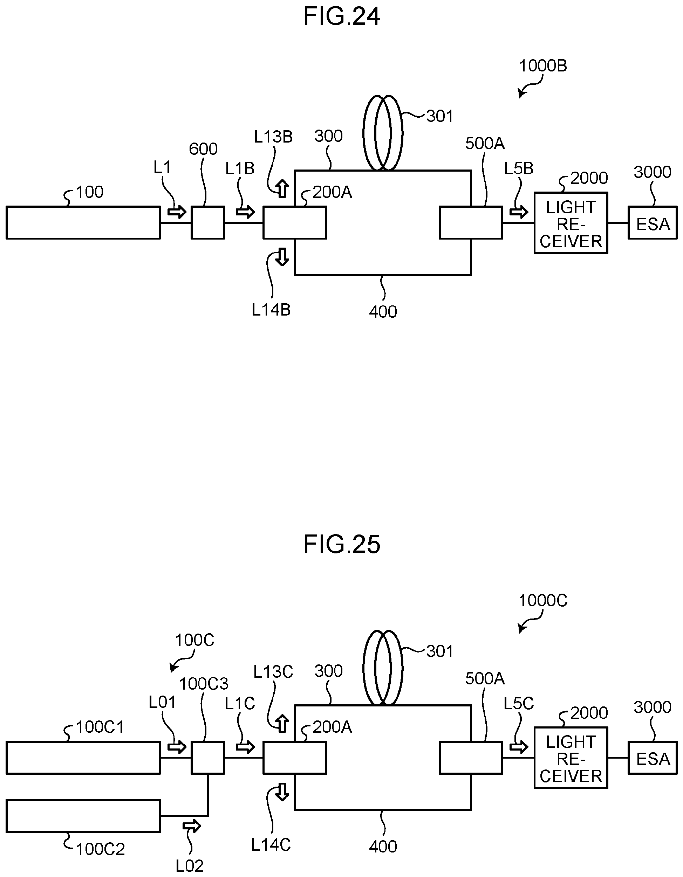

FIG. 24 is a schematic diagram of the optical interferometer according to the third embodiment. An optical interferometer 1000B according to the third embodiment is configured by disposing a polarizer 600 in between the light source 100 and the power divider 200A in the optical interferometer 1000A according to the second embodiment. The polarizer 600 is, for example, a polarization beam combiner (PBC). The polarizer 600 is set in such a way that the polarization direction thereof is aligned to the polarization direction of the first light L1. As a result, the polarizer 600 outputs a first light L1B that has a heightened degree of polarization as compared to the first light L1. Meanwhile, although it is desirable that a polarization-maintaining fiber is used as a pigtail fiber for connecting the light source 100 and the polarizer 600, it is also possible to use a normal optical fiber that is not of the polarization-maintaining type.

The power divider 200A receives input of the first light L1B, performs power division of the first light L1B into a third component L13B and a fourth component L14B, and outputs those components. The power combiner 500A combines the third component L13B, which has propagated through the first optical path 300, and the fourth component L14B, which has propagated through the second optical path 400; and outputs the combined light as a fifth light L5B.

### <Configuration according to fourth embodiment>

FIG. 25 is a schematic diagram of the optical interferometer according to the fourth embodiment. An optical interferometer 1000C according to the fourth embodiment is configured by substituting a light source 100C for the light source 100 of the optical interferometer 1000 according to the second embodiment.

The light source 100C includes two primary light sources 100C1 and 100C2, and includes a polarization beam combiner 100C3. The two primary light sources 100C1 and 100C2 output primary lights L01 and L02, respectively, in which the RIN is suppressed in an identical manner to the first light L1. The two light sources 100C1 and 100C2 can have the same configuration as the configuration of the light source 100. The polarization beam combiner 100C3 performs polarization combining of the two primary lights L01 and L02 having mutually orthogonal polarization states, and outputs the combined light as a first light L1C. In that case, it is desirable that a polarization-maintaining fiber is used a pigtail fiber for connecting the primary light sources 100C1 and 100C2 and the polarization beam combiner 100C3.

The power divider 200A receives input of the first light L1C, performs power division of the first light L1C into a third component L13C and a fourth component L14C, and outputs the components. The power combiner 500A combines the third component L13C, which has propagated through the first optical path 300, and the fourth component L14C, which has propagated through the second optical path 400; and outputs the combined light as a fifth light L5C.

Each of the optical interferometers 1000A, 1000B, and 1000C has the configuration of a Mach-Zehnder optical interferometer. In the following explanation, the configuration such as that of the optical interferometer 1000 according to the first embodiment is sometimes referred to as a wavelength-division interferometer, and the configuration such as that of the optical interferometers 1000A, 1000B, and 1000C is referred to as a power-division interferometer.

In the second to fourth embodiments, the light receiver 2000 receives the fifth light L5, or the fifth light L5B, or the fifth light L5C; and outputs a current signal according to the received light intensity to the electrical spectrum analyzer 3000. Based on the current signal input thereto, the electrical spectrum analyzer 3000 measures the RIN spectrum of the fifth light L5, or the fifth light L5B, or the fifth light L5C. The electrical spectrum analyzer 3000 represents an example of an electrical spectrum analyzer that displays the spectrum of the input electrical signals in a frequency domain. In the second to fourth embodiments, along with the light receiver 2000 and the electrical spectrum analyzer 3000; the optical interferometer 1000A, or the optical interferometer 1000B, or the optical interferometer 1000C constitutes an optical interferometer system.

### <Characteristics of fifth light>

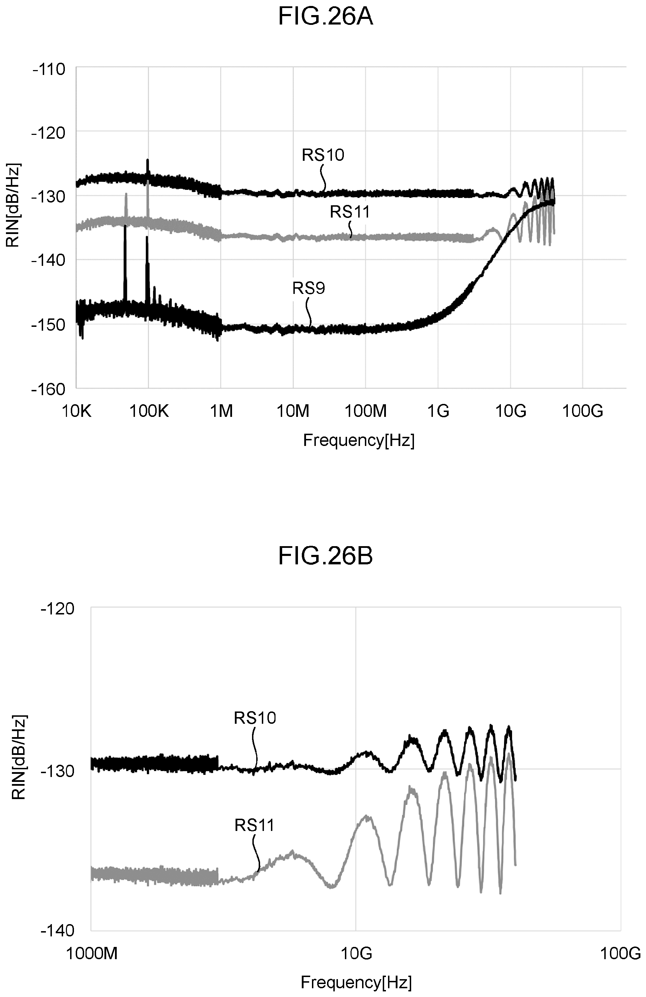

Given below is the explanation about the characteristics of the fifth light. FIGS. 26A and 26B are diagrams illustrating examples of the RIN spectrum of the fifth light in the case in which the optical fiber 301 is not included in the optical interferometers according to the second and third embodiments. In FIG. 26A, a RIN spectrum RS9 represents the RIN spectrum of the first light L1 in the optical interferometer 1000A or the first light L1B in the optical interferometer 1000B. A RIN spectrum RS10 represents the RIN spectrum of the fifth light L5 in the optical interferometer 1000A. A RIN spectrum RS11 represents the RIN spectrum of the fifth light L5B in the optical interferometer 1000B. In FIG. 26B is illustrated some part of the RIN spectrums RS10 and RS11.

The first light L1 in the optical interferometer 1000A has a substantially identical RIN spectrum to the RIN spectrum of the first light L1B that represents the light obtained after the first light L1 has passed through the polarizer 600 in the optical interferometer 1000B. Moreover, that RIN spectrum is substantially identical also to the RIN spectrum RS1 illustrated in FIG. 9.

On the other hand, as illustrated in FIGS. 26A and 26B, the RIN spectrums RS10 and RS11 in the optical interferometers 1000A and 1000B, respectively, representing power-division interferometers have significantly different properties than, for example, the properties of the RIN spectrums RS3 and RS4 in the optical interferometer 1000 representing a wavelength-division interferometer as illustrated in FIG. 16. More particularly, in the RIN spectrums RS10 and RS11, there was a significant drop in the amount of RIN suppression. However, in the RIN spectrum RS11, the RIN level was low at about -135 dB/Hz. Moreover, in the RIN spectrums RS10 and RS11, although ripples are almost not observed in the RIN suppressed region, they occur more prominently in the high-frequency band equal to or greater than 10 GHz that is higher than the corner frequency. These ripples have the FSR of about 5 GHz. Such characteristics are similar to the characteristics of, what is called, the white light. However, the coherence length is greater than the coherence length of the white light. The fact that the FSR is equal to 5 GHz is believed to imply that the difference between the optical length of the first optical path 300, which does not include the optical fiber 301, and the optical length of the second optical path 400 is approximately equal to 4 cm. In this way, the optical interferometers 1000A and 1000B representing power-division interferometers are sensitive even to a minor difference of 4 cm in the optical lengths. Moreover, it is believed that the RIN spectrum RS11 has a greater amplitude of interference, and has higher interference than the case of the RIN spectrum RS10.

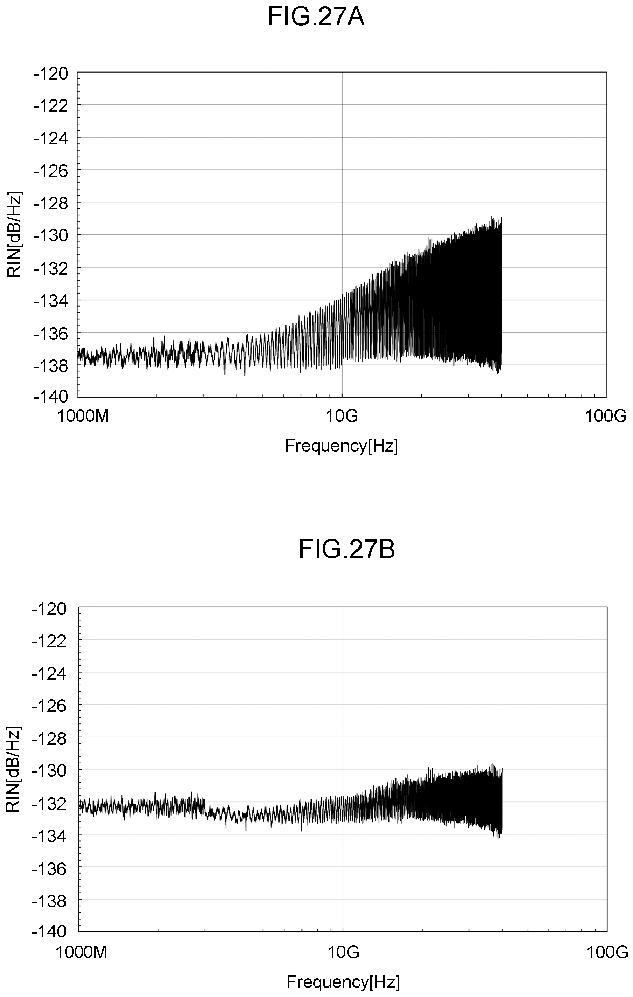

FIGS. 27A and 27B are diagrams illustrating examples of the RIN spectrum of the fifth light in the optical interferometers according to the third and fourth embodiments. FIG. 27A corresponds to the case of the RIN spectrum of the fifth light in the optical interferometer 1000B, with the optical fiber 301 having the length of 1 m. FIG. 27B corresponds to the case of the RIN spectrum of the fifth light in the optical interferometer 1000C, with the optical fiber 301 having the length of 1 m. The results of FIGS. 27A and 27B indicate that, regarding the RIN suppressed light obtained as a result of performing polarization beam combining of two RIN suppressed lights having mutually orthogonal polarization states, the amount of RIN suppression can be reduced to a greater extent as compared to the RIN suppressed light that has passed a polarizer, and the amplitude of interference can be reduced. It indicates the possibility of generating a semi-white light that has suppressed interference and that is a high-output broadband light (having a large FWHM), and indicates that the amount of RIN suppression and interference can be controlled by setting the RIN suppressed light in an appropriate manner.

According to the results explained above, the optical interferometers 1000A, 1000B, and 1000C according to the second to fourth embodiments are power-division interferometers, and they have a simpler configuration than a wavelength-division interferometer such as the optical interferometer 1000 including the wavelength divider 200 according to the first embodiment. Moreover, since the optical interferometers 1000A, 1000B, and 1000C are capable of generating a pseudo-white light (a semi-white light), they are applicable in various intended purposes. For example, the optical interferometers 1000A, 1000B, and 1000C are suitable in obtaining a light having the interference characteristics of the delay equivalent to the length of about a few meters of an optical fiber.

Meanwhile, a broadband light such as the ASE light of a normal SOA has the coherence length of about a few tens of meters as explained earlier. The interference involving such a low-coherence light is called white light interference and has been widely in use as OCT (Optical Coherence Tomography). In that, high-resolution distance measurement is achieved by utilizing the fact that the coherence length is short.

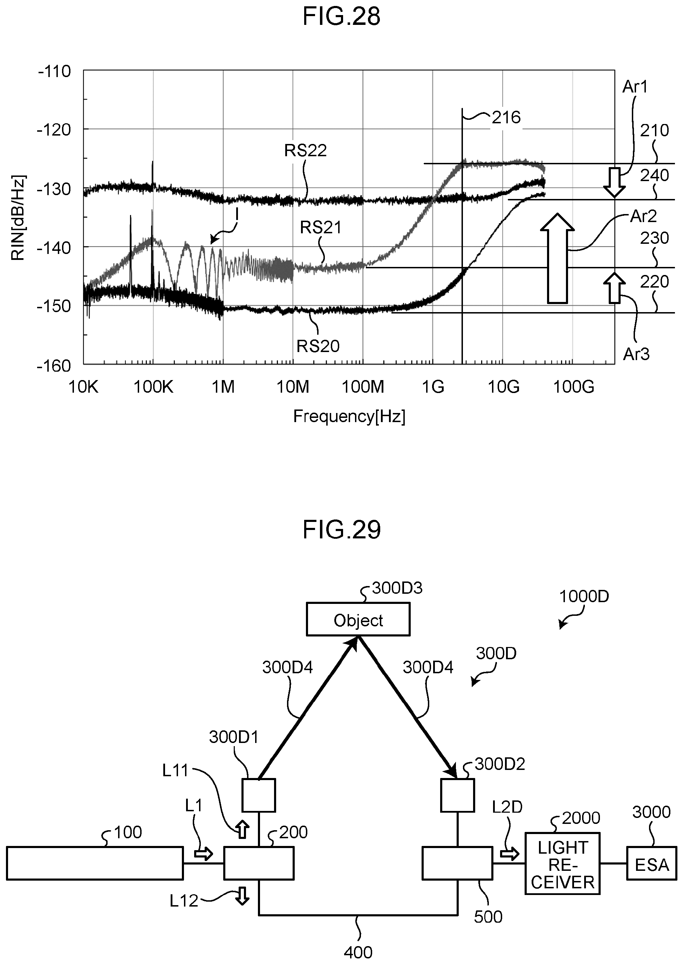

FIG. 28 is a diagram illustrating the comparison of exemplary RIN spectrums of the first light, the second light, and the fifth light in the optical interferometers according to the first and second embodiments. More particularly, a RIN spectrum RS20 represents the RIN spectrum of the first light L1, a RIN spectrum RS21 represents the RIN spectrum of the second light in the optical interferometer 1000, and a RIN spectrum RS22 represents the RIN spectrum of the fifth light L5 in the optical interferometer 1000A. Meanwhile, the optical fiber 301 has the length of 1 km. A corner frequency 216 represents the corner frequency in the RIN spectrum RS21. The RIN spectrum RS20 has the corner frequency equal to or greater than 40 GHz. The level of the line 210 represents the ASE-ASE beat noise level in the ASE light. A line L220 represents the level of the suppressed RIN in the RIN spectrum RS20. A line L230 represents the level of the suppressed RIN in the RIN spectrum RS21. A line LS240 represents the level of the suppressed RIN in the RIN spectrum RS22. An arrow Ar1 indicates that the amount of RIN suppression in the RIN spectrum RS22 of the fifth light L5 is approximately equal to 7 dB. An arrow Ar2 indicates that the amount of RIN suppression in the RIN spectrum RS22 of the fifth light L5 is lessened by approximately 20 dB than the amount of RIN suppression in the RIN spectrum RS20 of the first light L1. An arrow Ar3 indicates that the amount of RIN suppression in the RIN spectrum RS21 of the second light L2 is lessened by approximately 7 dB than the amount of RIN suppression in the RIN spectrum RS20 of the first light L1.

### (Fifth embodiment)

FIG. 29 is a schematic diagram of an optical interferometer according to a fifth embodiment. An optical interferometer 1000D in configured by substituting a first optical path 300D for the first optical path 300 in the optical interferometer 1000 according to the first embodiment.

The first optical path 300D includes spatial optical systems 300D1 and 300D2, a measurement target 300D3, and a spatial optical path 300D4. The spatial optical system 300D1 is a spatial optical system that collimates the first component L11 output by the wavelength divider 200 and outputs the collimated component into the space toward the measurement target 300D3; and that includes, for example, a lens. The measurement target 300D3 represents the target for distance measurement or the target for movement velocity measurement. The spatial optical path 300D4 is an optical path through which the first component L11 propagates toward the measurement target 300D3, and through which the first component L11 that has reflected from the measurement target 300D3 propagates toward the spatial optical system 300D2. The spatial optical system 300D2 is a spatial optical system that receives the first component L11, which has reflected from the measurement target 300D3, and combines the first component L11 with the wavelength multiplexer 500; and that includes, for example, a lens. The wavelength multiplexer 500 multiplexes the first component L11, which has propagated through the spatial optical path 300D4, and the second component L12, which has propagated through the second optical path 400; and outputs the multiplexed light as a second light L2D. That is, the first optical path 300D includes the spatial optical path 300D4 through which the first component L11 propagates toward the measurement target 300D3 and travels back upon reaching the measurement target 300D3.

In the optical interferometer 1000D, as a result of analyzing the ripples appearing in the RIN spectrum of the second light L2D, the optical length of the spatial optical path 300D4 can be measured in an identical manner to the case of the optical interferometer 1000, and the distance to the measurement target 300D3 can be calculated from the measured optical length. Moreover, as a result of analyzing the temporal changes in the ripples, the movement velocity of the measurement target 300D3 can be calculated. Herein, the movement velocity represents the relative movement velocity of the wavelength divider 200 of the optical interferometer 1000D with respect to the wavelength multiplexer 500.

### (Sixth embodiment)

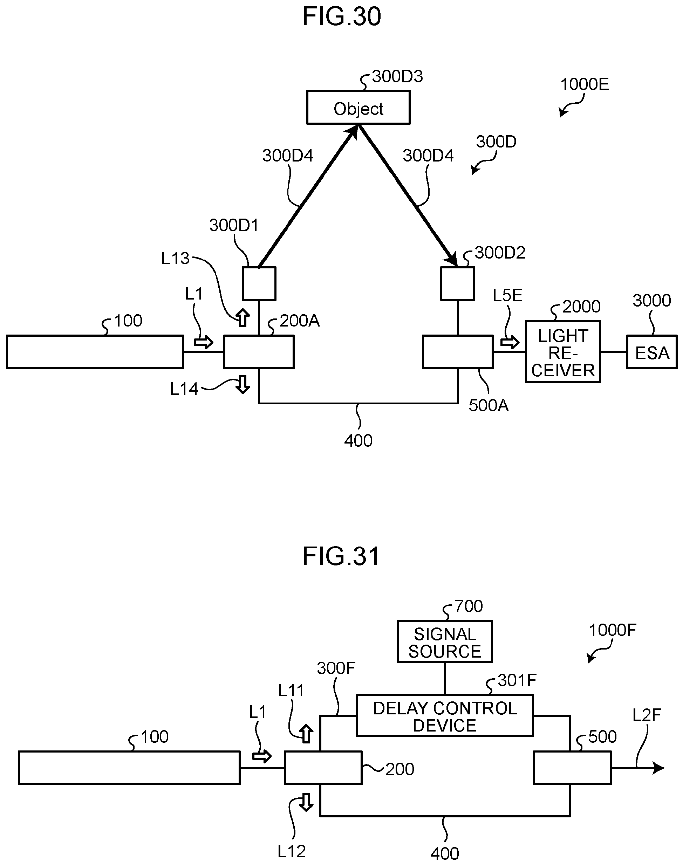

FIG. 30 is a schematic diagram of an optical interferometer according to a sixth embodiment. An optical interferometer 1000E is configured by substituting the first optical path 300D according to the fifth embodiment for the first optical path 300 in the optical interferometer 1000A according to the second embodiment.

The spatial optical system 300D1 collimates the third component L13 output by the power divider 300A, and outputs the collimated component into the space toward the measurement target 300D. The spatial optical path 300D4 is an optical path through which the third component L13 propagates toward the measurement target 300D3, and through which the third component L13 that has reflected from the measurement target 300D3 propagates toward the spatial optical system 300D2. The spatial optical system 300D2 receives the third component L13, which has reflected from the measurement target 300D3, and combines the third component L13 with the power combiner 500A. The power combiner 500A combines the third component L13, which has propagated through the spatial optical path 300D4, and the fourth component L14, which has propagated through the second optical path 400; and outputs the combined light as a fifth light L5E. That is, the first optical path 300D includes the spatial optical path 300D4 through which the third component L13 propagates toward the measurement target 300D3 and travels back upon reaching the measurement target 300D3.

In the optical interferometer 1000E, as a result of analyzing the ripples appearing in the RIN spectrum of the fifth light L5E, the optical length of the spatial optical path 300D4 can be measured in an identical manner to the case of the optical interferometer 1000A, and the distance to the measurement target 300D3 can be calculated from the measured optical length. Moreover, as a result of analyzing the temporal changes in the ripples, the movement velocity of the measurement target 300D3 can be calculated. Particularly, the optical interferometer 1000E is suitable for the distance measurement in the order of centimeters or smaller units than the centimeter.

### (Seventh embodiment)

FIG. 31 is a schematic diagram of an optical interferometer according to a seventh embodiment. The optical interferometer 1000F is configured by substituting a first optical path 300F for the first optical path 300 in the optical interferometer 1000 according to the first embodiment.

In the first optical path 300F, a delay control device 301F is disposed. The delay control device 301F is a device capable of controlling the delay period of the light in the first optical path based on a modulation signal coming from a signal source 700; and, for example, includes an electrode for varying the effective refractive index of the first optical path 300F.

In that case, a second light L2F that is the result of multiplexing the first component L11, which has propagated through the first optical path 300F, and the second component L12, which has propagated through the second optical path 400, and that is output from the wavelength multiplexer 500 represents the modulation signal. In that case, the optical interferometer 1000F functions as a modulator.

Meanwhile, in the optical interferometer 1000F, although a delay control device is disposed in the first optical path, it can alternatively be disposed in the second optical path. Still alternatively, a delay control device can be disposed in the first optical path as well as in the second optical path.

Meanwhile, in the embodiments described above, the seed light source 11 is an SOA, and the seed light LS is the ASE light of that SOA. Alternatively, the seed light source 11 can be a rare-earth-doped optical fiber amplifier, or a Raman optical fiber amplifier, or an SLD; and the seed light LS can be the corresponding ASE light.

In the optical interferometer 1000A illustrated in FIG. 23 according to the second embodiment, the present inventors set the length of the optical fiber 301 to 1 m; set the driving current Is to 0 mA, that is, set the state in which the SOA representing the seed light source 11 does not output the seed light LS; set the driving current Ib to 1000 mA; and measured the fifth light L5 that was output. Then, the present inventors found that the fifth light L5 had different features as compared to FIGS. 27A and 27B. In the following explanation, the case in which, in a power-division interferometer such as the optical interferometer 1000A, when the seed light LS is not output, that is, when the first light is merely the ASE light of the booster amplifier 13, that interferometer is sometimes referred to as a seedless power-division interferometer; and the light source in that case is sometimes referred to as a seedless light source.

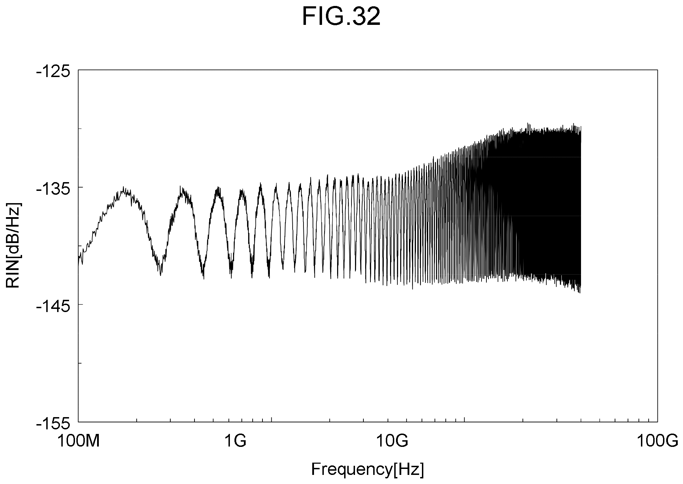

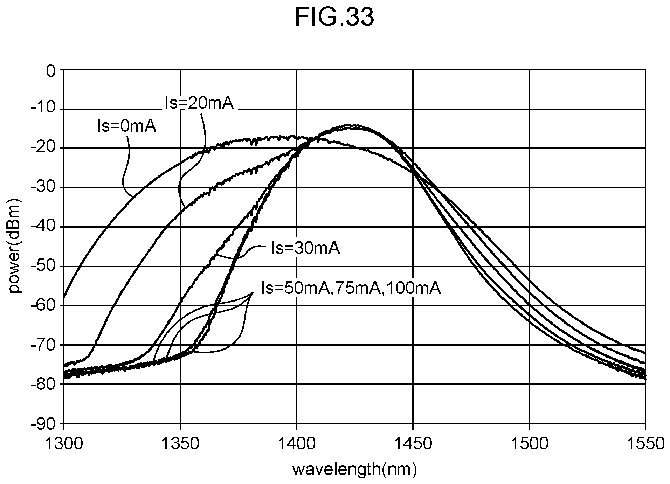

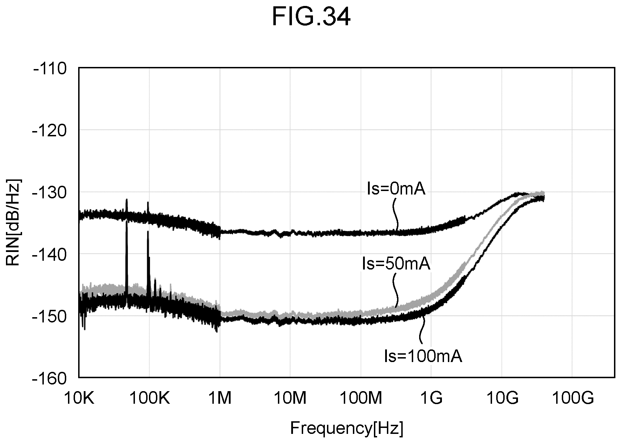

FIG. 32 is a diagram illustrating an example of the RIN spectrum of the fifth light in a seedless power-division interferometer having the configuration corresponding to the second embodiment. Herein, a seedless power-division interferometer having the configuration corresponding to the second embodiment implies that the driving current Is is set to 0 mA in the second embodiment. When FIG. 32 is compared with FIGS. 27A and 27B, it can be seen that the ripples present in the RIN suppressed region on the low-frequency side in FIG. 32 disappear from FIGS. 27A and 27B. FIG. 33 is a diagram illustrating an example of the power spectrum of the first light in a seedless power-division interferometer or in the optical interferometer 1000A according to the second embodiment. FIG. 34 is a diagram illustrating an example of the RIN spectrum of the first light in a seedless power-division interferometer or in the optical interferometer 1000A according to the second embodiment.

In the optical interferometer 1000A, the present inventors set the length of the optical fiber 301 to 1m, substituted an EDFA for the light source 100 representing a broadband light source, and then measured the RIN spectrum of the fifth light while treating the first light as the ASE light of the EDFA.

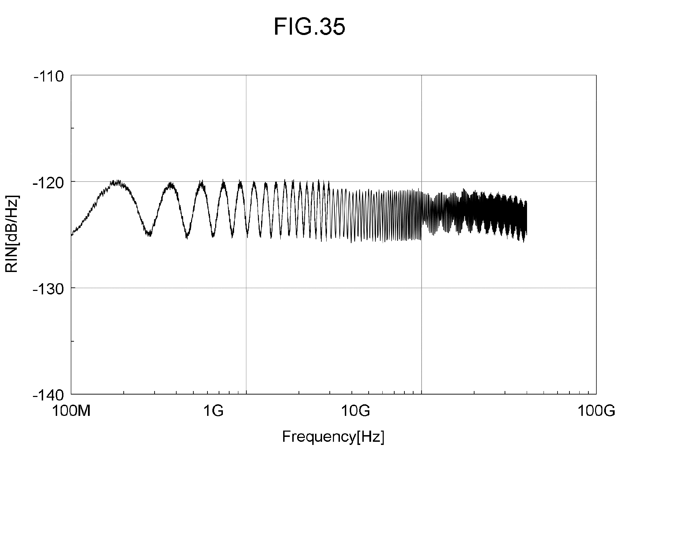

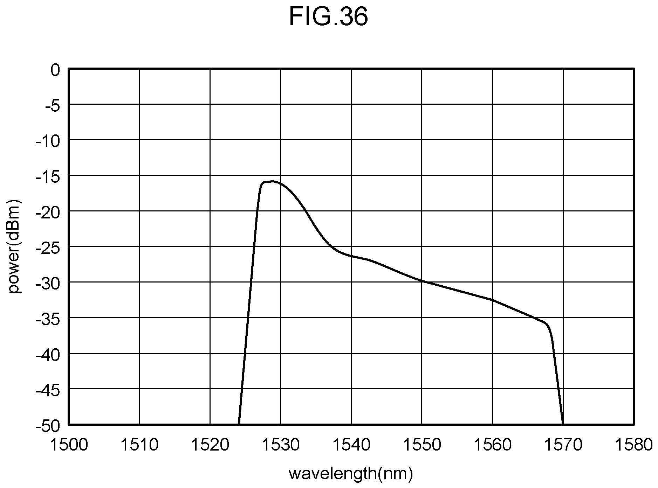

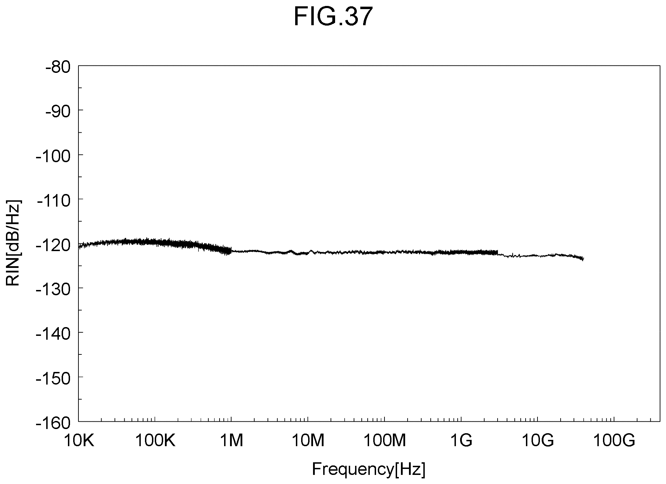

FIG. 35 is a diagram illustrating an example of the RIN spectrum of the fifth light in the case in which an EDFA is substituted for the light source 100 in the optical interferometer 1000A according to the second embodiment. FIG. 36 is a diagram illustrating an example of the power spectrum of the first light that is output from the EDFA. FIG. 37 is a diagram illustrating an example of the RIN spectrum of the first light that is output from the EDFA. In FIG. 35 too, it can be seen that ripples are present in an identical manner to FIG. 32. However, with reference to FIG. 32, when the frequency is equal to or greater than 10 GHz, the amplitude of the ripples increases as compared to the case in which the frequency is lower than 10 GHz. In contrast, with reference to FIG. 35, it can be seen that the amplitude of the ripplers decreases.

With reference to FIGS. 32 and 35, a study was performed about the cause for the appearance of ripples that exhibit prominent interference in a high-frequency domain in a seedless power-division interferometer. According to the study performed by the present inventors, when Is=0 mA holds true as illustrated in FIG. 21A, that is, in the state of having a seedless light source, ripples appear in the power spectrum of the first light. Hence, in a seedless power-division interferometer, the main cause for interference is estimated to be the FP modes that have grown enough to appear as ripples in the power spectrum. Meanwhile, as explained with reference to FIGS. 21A to 21F too, it is estimated that the FP modes can be present in the buried state in the ASE light. Hence, for example, even when the first light represents the ASE light of an EDFA, it is estimated that some oscillation modes are present and that the oscillation modes are present albeit not easily observable. Whether or not such oscillation modes are present can be confirmed based on whether or not ripples are present in the RIN spectrum of the fifth light.

Hence, an optical interferometer according to another embodiment of the present invention can be configured to include: a broadband light source that outputs a first light in which periodic ripples appear in the power spectrum of the light; a power divider that performs power division of the first light into a third component and a fourth component, and outputs those components; a first optical path through which the third component output from the power-divider propagates; a second optical path through which the fourth component output from the power divider propagates; and a power combiner that combines the third component, which has propagated through the first optical path, and the fourth component, which has propagated through the second optical path; and outputs the combined light as a fifth light. More particularly, this type of an optical interferometer can be configured in such a way that, in the optical interferometer 1000A according to the second embodiment, either the SOA representing the seed light source 11 is set not to output the seed light LS or the light source 100 is substituted with an EDFA. Meanwhile, in the power spectrum of the light, the amplitude of the ripples is, for example, equal to or greater than 0.5 dB and is, for example, equal to or smaller than 10 dB.

### (Eighth embodiment)

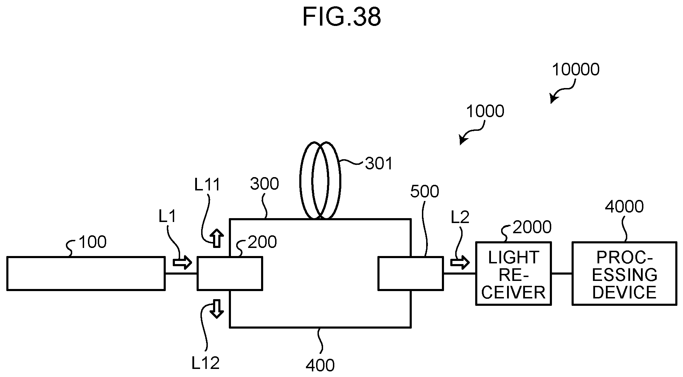

FIG. 38 is a schematic diagram of an optical interferometer system according to an eighth embodiment. An optical interferometer system 10000 includes the optical interferometer 1000 illustrated in FIG. 1; the light receiver 2000 illustrated in FIG. 1; and a processing device 4000 that is substituted for the electrical spectrum analyzer 3000 of the optical interferometer system configured using the electrical spectrum analyzer 3000.

The processing device 4000 is configured using, for example, an electrical signal processing device or a computer of a known type. The processing device 4000 electrically processes the current signals that are input from the light receiver 2000. As a result of performing such electrical processing, the information included in the current signals can be mathematically processed (calculated) in the frequency region.

In the optical interferometer system 10000 according to the eighth embodiment, the optical interferometer 1000 can be substituted with the optical interferometer according to any one of the first to sixth embodiments.

In the eighth embodiment described above or in the other optical interferometer system explained earlier, the RIN spectrum of the second light or the RIN spectrum of the fifth light can be obtained; the delay period τ₀ can be obtained from the FSR of the obtained RIN spectrum; and an optical path difference measurement method can be implemented for estimating an optical path difference L between the first optical path and the second optical path according to the following equation.$L = {τ}_{0} ⋅ c / n$

Herein, c represents the velocity of light in a vacuum, and n represents the effective refractive index of the optical paths having the optical path difference therebetween. Moreover, the relationship between FSR and the delay period τ₀ is expressed using the following equation.$FSR = 1 / {τ}_{0}$

For example, the processing device 4000 stores a program that causes a computer to execute the optical difference measurement method explained above. When the processor of a computer included in the processing device 4000 executes the program, the optical path difference measurement method can be implemented.

### <Example of measurement range>

The following explanation is given about the optical path difference (measurement range) suitable for measurement in the optical interferometers according to the embodiments described above (i.e., in a wavelength-division interferometer, a power-division interferometer, and a seedless power-division interferometer) and in the optical interferometer system. In the following explanation, the measurement target is an optical fiber representing the target for length measurement and having the effective refractive index of 1.45.

Firstly, the lower limit of measurement is decided according to the bandwidth of the light receiver 2000. Herein, when the optical fiber has the length of 1 cm, the FSR is approximately equal to 20 GHz. Hence, the lower limit of measurement is about sub-cm (i.e., equal to or smaller than about 1 cm). For example, when the light receiver 2000 has the bandwidth of 100 GHz, it becomes possible to perform measurement for about 2 mm.

The upper limit of measurement is decided according to, for example, the extent of interference in the optical interferometer. In the case of a wavelength-division interferometer, the upper limit is, for example, equal to a few tens of km such as 40 km as explained earlier.

In the case of a power-division interferometer, the ripples start appearing at about 1 GHz or more at which the RIN suppression starts easing up. Hence, the upper limit is, for example, sub-m such as 0.2 m (for example, including about a few tens of cm).

In the case of a seedless power-division interferometer, the upper limit is longer than the upper limit in the case of a power-division interferometer. For example, the upper limit is equal to 100 m.

Meanwhile, in the optical interferometer system explained earlier, conversion to a photoelectric current is performed using a light receiver, and the interfering light is analyzed. However, the analysis method is not limited to that method.

Moreover, the present invention is not limited by the embodiments described above. Thus, configurations achieved by appropriately combining the constituent elements are also included in the present invention.

For example, the configuration of the optical interferometer 1000F according to the seventh embodiment, which is a wavelength-division interferometer, can be applied in the optical interferometers 1000A to 1000C according to the second to fourth embodiments, which are power-division interferometers, and can be made to function as a modulator.

When the bandwidth of the modulation signals is lower than the corner frequency of the first light, it is desirable to use a wavelength-division interferometer as explained in the seventh embodiment. In that case, since the noise characteristics of the light source itself are close to the shot-noise limit, it is advantageous from the perspective of noise characteristics. On the other hand, when the bandwidth of the modulation signals is higher than the corner frequency of the first light, it is desirable to use a power-division interferometer. Moreover, on account of being a RIN suppressed light having a wide FWHM, the first light is more suitable to spatial transmission, in which the high output of the first light is utilized, than the transmission in an optical fiber having chromatic dispersion.

Meanwhile, although the invention has been described with respect to specific embodiments for a complete and clear disclosure, the appended claims are to be construed as embodying all modifications and alternative constructions that may occur to one skilled in the art that fairly fall within the basic teaching herein set forth.

### Industrial Applicability

The present invention can be used in an optical interferometer.

### Reference Signs List

10 light source module
11 seed light source
12, 14 optical isolator
13 booster amplifier
13a first end face
13b second end face
15 output optical fiber
100, 100C light source
100C1, 100C2 primary light source
100C3 polarization beam combiner
101, 102 driving device
200 wavelength divider
200A power divider
211 low frequency domain
213, 216 corner frequency
214, 215 line
300, 300D, 300F first optical path
300D1, 300D2 spatial optical system
300D3 measurement target
300D4 spatial optical path
301 optical fiber
301F delay control device
400 second optical path
500 wavelength multiplexer
500A power combiner
600 polarizer
700 signal source
1000, 1000A, 1000B, 1000C, 1000D, 1000E, 1000F optical interferometer
2000, 5005 light receiver
3000 electrical spectrum analyzer
4000 processing device
5000 measurement system
5001, 5004 optical coupler
5002 first optical path
5003 second optical path
10000 optical interferometer system
Ar1, Ar2, Ar3 arrow
C1, C2 driving current
L01, L02 primary light
L1, L1B, L1C first light
L11 first component
L12 second component
L13, L13B, L13C third component
L14, L14B, L14C fourth component
L2, L2D, L2F second light
L5, L5B, L5C, L5E fifth light
LS seed light
PS1, PS2 power spectrum
RS1, RS2, RS3, RS4, RS5, RS6, RS7, RS8, RS9, RS10, RS11,
RS20, RS21, RS22 RIN spectrum

## Claims

1. An optical interferometer comprising:
a broadband light source that outputs a first light in which relative intensity noise (RIN) at a predetermined frequency domain is suppressed;
a wavelength divider that performs wavelength division of the first light into a first component and into a second component having a central wavelength different from a central wavelength of the first component, and outputs the first component and the second component;
a first optical path through which the first component output from the wavelength divider propagates;
a second optical path through which the second component output from the wavelength divider propagates; and
a wavelength multiplexer that multiplexes the first component, which has propagated through the first optical path, and the second component, which has propagated through the second optical path, and outputs multiplexed light as a second light.

2. The optical interferometer according to claim 1, wherein full width at half maximum of a power spectrum with respect to wavelength of the first component is narrower than full width at half maximum of a power spectrum with respect to wavelength of the second component.

3. The optical interferometer according to claim 1, wherein full width at half maximum of a power spectrum with respect to wavelength of the first light is equal to or greater than 5 nm and equal to or smaller than 30 nm.

4. The optical interferometer according to claim 1, further comprising a delay control device that is disposed either in the first optical path or in the second optical path.

5. The optical interferometer according to claim 1, wherein a polarization control mechanism is not included in the first optical path and the second optical path.

6. The optical interferometer according to claim 1, wherein optical path difference between the first optical path and the second optical path is in range from sub-cm to a few tens of km.

7. An optical interferometer comprising:
a broadband light source that outputs a first light in which relative intensity noise (RIN) at a predetermined frequency domain is suppressed;
a power divider that performs power division of the first light into a third component and into a fourth component, and outputs the third component and the fourth component;
a first optical path through which the third component output from the power divider propagates;
a second optical path through which the fourth component output from the power divider propagates; and
a power combiner that combines the third component, which has propagated through the first optical path, and the fourth component, which has propagated through the second optical path, and outputs combined light as a fifth light.

8. The optical interferometer according to claim 1, wherein optical path difference between the first optical path and the second optical path is in range from sub-cm to sub-m.

9. An optical interferometer comprising:
a broadband light source that outputs a first light in which periodic ripples appear in power spectrum of light;
a power divider that performs power division of the first light into a third component and into a fourth component, and outputs the third component and the fourth component;
a first optical path through which the third component output from the power divider propagates;
a second optical path through which the fourth component output from the power divider propagates; and
a power combiner that combines the third component, which has propagated through the first optical path, and the fourth component, which has propagated through the second optical path, and outputs combined light as a fifth light.

10. The optical interferometer according to claim 1, wherein optical path difference between the first optical path and the second optical path is in range from sub-cm to 100 m.

11. The optical interferometer according to claim 7 or 9, further comprising a polarizer that is disposed in between the broadband light source and the power divider.

12. The optical interferometer according to claim 7, wherein the broadband light source includes
two primary light sources that output primary lights in which RIN at the predetermined frequency domain is suppressed, and
a polarization beam combiner that performs polarization beam combining of the two primary lights coming from the two primary light sources, and outputs beam combined light as the first light.

13. The optical interferometer according to claim 7 or 9, wherein amount of RIN suppression in the fifth light is eased up as compared to amount of RIN suppression in the first light.

14. The optical interferometer according to any one of claims 1, 7, and 9, wherein the first optical path includes a spatial optical path through which the first component or the third component propagates toward a measurement target and also travels back upon reaching the measurement target.

15. The optical interferometer according to any one of claims 1, 7, and 9, wherein the first optical path includes a target optical fiber for length measurement.

16. The optical interferometer according to claim 1 or 7, wherein, in the first light, amount of RIN suppression at a frequency in the predetermined frequency domain is equal to or greater than 10 dB.

17. The optical interferometer according to any one of claims 1, 7, and 9, wherein, in the first light, corner frequency at which RIN suppression begins is equal to or greater than 1 GHz.

18. An optical interferometer system comprising:
the optical interferometer according to any one of claims 1, 7, and 9;
a light receiver that receives the second light or the fifth light, and outputs a current signal corresponding to the received light; and
an electrical spectrum analyzer that displays, in a frequency domain, spectrum of the current signal input thereto.

19. An optical interferometer system comprising:
the optical interferometer according to any one of claims 1, 7, and 9;
a light receiver that receives the second light or the fifth light, and outputs a current signal corresponding to received light; and
a processing device that processes, in a frequency domain, information included in the current signal input thereto.

20. An optical path difference measurement method implemented by the optical interferometer system according to claim 19, comprising:
obtaining RIN spectrum of the second light or the fifth light;
obtaining a delay period τ₀ from FSR (Free Spectral Range) of the obtained RIN spectrum; and
estimating an optical path difference L between the first optical path and the second optical path according to equation given below. $L = {τ}_{0} ⋅ c / n$
Herein, c represents velocity of light in a vacuum, and n represents effective refractive index of optical paths having the optical path difference therebetween.
